# EUROPEAN PATENT SPECIFICATION

(11) **EP 3 633 898 B1**
(45) Date of publication and mention of the grant of the patent: **22.11.2023**
(21) Application number: 18823512.1
(22) Date of filing: 26.06.2018
(51) Int. Cl.: H04L 1/18, H04L 1/16, H04L 5/00

(54) **DATA TRANSMISSION METHOD, USER EQUIPMENT AND NETWORK DEVICE**
DATENÜBERTRAGUNGSVERFAHREN, BENUTZERGERÄT UND NETZWERKVORRICHTUNG
PROCÉDÉ DE TRANSMISSION DE DONNÉES, ÉQUIPEMENT UTILISATEUR ET DISPOSITIF DE RÉSEAU

(30) Priority: 29.06.2017 CN 201710517230
(43) Date of publication of application: 08.04.2020
(73) Proprietor: Huawei Technologies Co., Ltd., Longgang District Shenzhen, Guangdong 518129 (CN)
(72) Inventor: SU, Hongjia, Shenzhen Guangdong 518129 (CN); PANG, Jiyong, Shenzhen Guangdong 518129 (CN); XIANG, Zhengzheng, Shenzhen Guangdong 518129 (CN)
(74) Representative: MERH-IP Matias Erny Reichl Hoffmann Patentanwälte PartG mbB
(86) International application number: PCT/CN2018/092792
(87) International publication number: WO 2019/001406

(56) References cited:
- WO-A1-2011/086236
- WO-A2-2012/093783
- CN-A- 104 662 817
- CN-A- 106 888 074
- US-A1- 2009 262 678
- US-A1- 2012 002 657
- LG ELECTRONICS: "Discussion on CB group based HARQ operation", 3GPP DRAFT; R1-1704916 NR CBG HARQ_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051243051, Retrieved from the Internet: URL:http://www.3gpp.org/ftp/Meetings_3GPP_ SYNC/RAN1/Docs/ [retrieved on 2017-04-02]
- NOKIA ET AL: "Native sidelink support in flexible frame structure for NR", 3GPP DRAFT; R1-167268, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140610, Retrieved from the Internet: URL:http://www.3gpp.org/ftp/Meetings_3GPP_ SYNC/RAN1/Docs/ [retrieved on 2016-08-21]

## Description

### TECHNICAL FIELD

Embodiments of the present invention relate to communications technologies, and in particular, to a data transmission method, user equipment, and a network device.

### BACKGROUND

A user equipment cooperation mechanism is introduced to a future 5G communications system. When the user equipment cooperation mechanism is used, one or more user equipments located in a network coverage central area or in a better network environment may assist, through an end-to-end communications technology, a network device to communicate with user equipment having poor network quality of service in a cell. In this way, a throughput rate of the user equipment having poor network quality of service can be increased, further to increase a throughput rate of an entire communications system. The user equipment that assists the user equipment having poor network quality of service in the cell may be referred to as cooperation user equipment (Cooperation User Equipment, CUE), and the user equipment having poor network quality of service in the cell may be referred to as target user equipment (Target User Equipment, TUE).

Specifically, based on the user equipment cooperation mechanism, the network device may multicast a transport block (Transport Block, TB) sent to TUE to each CUE and TUE. The TB may include at least one code block group (Code Block Group, CBG). After receiving the TB, each CUE decodes the TB. Then, each CUE may retransmit a CBG correctly decoded by the CUE to the TUE, to assist the TUE to decode the TB by retransmitting the CBG, to increase a probability that the TUE correctly decodes the TB, thereby improving network quality of the TUE.

However, because each CUE and TUE have different locations in the network, correct CBGs received by each CUE and TUE may be different. Therefore, when the user equipment cooperation mechanism is used, the way in which CUE retransmits a CBG to TUE is urgently to be provided.

Document US 2009/262678 A1 discloses techniques involving communications between source and destination devices. Such communications may involve multiple cooperating devices that retransmit (e.g., simultaneously retransmit) transmissions sent by a source device. Thus, the delivery of transmissions from source devices to destination devices may involve two or more "hops" (e.g., a first "hop" comprising an initial transmission, and a second "hop" comprising two or more relay transmissions).

Document LG Electronics: "Discussion on CB group based HARQ operation", vol. RAN WG1, no. Spokane, USA; 20170403 - 20170407 discloses the retransmission of part of the CBGs of a TB.
Document WO 2011/086236 A1 discloses a method including sending a multicast packet to a cluster of recipients; receiving information indicating receiving status relating to the multicast packet from individual members of the cluster of recipients; and initiating intracluster retransmission of said multicast packet by sending to the cluster of recipients collective information about the receiving statuses of the members of the cluster of recipients.

### SUMMARY

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of this application provide a data transmission method, user equipment, and a network device, to improve efficiency of CBG retransmission between CUE and TUE.

According to a first aspect, an embodiment of this application provides a data transmission method according to appended claim 1.

By using the data transmission method according to the first aspect, when the first user equipment uses a user equipment cooperation mechanism to assist the second user equipment to communicate with the network device, after the first user equipment receives the TB sent by the network device to the second user equipment, the first user equipment may retransmit, based on the CBG indicated by the second user equipment, and the CBG correctly received by the first user equipment, a CBG required by the second user equipment to the second user equipment, to improve efficiency of CBG retransmission between the first user equipment and the second user equipment, thereby improving resource usage.

According to a second aspect, an embodiment of this application provides a data transmission method according to appended claim 6.

According to a third aspect, an embodiment of this application provides a data transmission method according to appended claim 10.

According to a fourth aspect, an embodiment of this application provides user equipment according to appended claim 12.

### BRIEF DESCRIPTION OF DRAWINGS

FIG. 1 is a framework diagram of a communications system according to an embodiment of this application;
FIG. 2 is a schematic diagram of CBG-based retransmission according to this application;
FIG. 3 is a schematic diagram of a user equipment cooperation process according to an embodiment of this application;
FIG. 4 is a signaling flowchart of a data transmission method according to an embodiment of this application;
FIG. 5 is a schematic diagram of user equipment cooperation according to an embodiment of this application;
FIG. 6 is a schematic diagram of another user equipment cooperation according to an embodiment of this application;
FIG. 7 is a signaling flowchart of another data transmission method according to an embodiment of this application;
FIG. 8 is a schematic diagram of still another user equipment cooperation according to an embodiment of this application;
FIG. 9 is a schematic diagram of still another user equipment cooperation according to an embodiment of this application;
FIG. 10 is a schematic diagram of still another user equipment cooperation according to an embodiment of this application;
FIG. 11 is a schematic diagram of still another user equipment cooperation according to an embodiment of this application;
FIG. 12 is a schematic diagram of still another user equipment cooperation according to an embodiment of this application;
FIG. 13 is a schematic diagram of still another user equipment cooperation according to an embodiment of this application;
FIG. 14 is a schematic structural diagram of user equipment according to an embodiment of this application;
FIG. 15 is a schematic structural diagram of another user equipment according to an embodiment of this application;
FIG. 16 is a schematic structural diagram of a network device according to an embodiment of this application;
FIG. 17 is a schematic structural diagram of still another user equipment according to an embodiment of this application;
FIG. 18 is a schematic structural diagram of still another user equipment according to an embodiment of this application;
FIG. 19 is a schematic structural diagram of another network device according to an embodiment of this application; and
FIG. 20 is a structural block diagram of user equipment being a mobile phone according to an embodiment of this application.

### DESCRIPTION OF EMBODIMENTS

It should be understood that, the term "and/or" in the embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, although terminology such as first, second, third and fourth in the embodiments of the present invention may be used to describe CBGs, the CBGs are not limited to the terminology. The terminology is used only to differentiate the CBG from each other. For example, without departing from the scope of the embodiments of this application, a first CBG may also be referred to as a second CBG. Similarly, a second CBG may also be referred to as a first CBG.

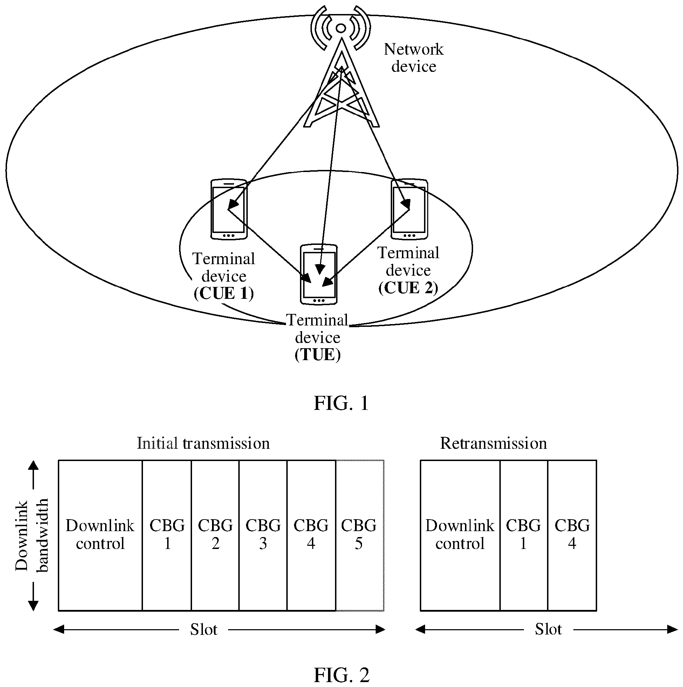

FIG. 1 is a framework diagram of a communications system according to an embodiment of this application. As shown in FIG. 1, the communications system includes: a network device 01 and user equipment 02. The network device 01 and the user equipment 02 may use one or more air interface technologies to communicate.

The network device may be a base station, or may be various radio access points, or may be a device communicating with user equipment through one or more sectors on an air interface in an access network. The base station may be configured to mutually convert a received over-the-air frame and an IP packet and serve as a router between a wireless terminal and a rest portion of the access network, where the rest portion of the access network may include an Internet protocol (IP) network. The base station may coordinate attribute management of the air interface. For example, the base station may be a base transceiver station (Base Transceiver Station, BTS) in a global system for mobile communications (Global System for Mobile Communications, GSM) system or a code division multiple access (Code Division Multiple Access, CDMA) system, or may be a NodeB (NodeB, NB) in a wideband code division multiple access (Wideband Code Division Multiple Access, WCDMA) system, or may alternatively be an evolved NodeB (Evolved NodeB, eNB or eNodeB) in a long term evolution (Long Term Evolution, LTE) system, or may be a relay site or an access point, or may be a base station gNB in a future 5G network, and this is not limited herein.

The user equipment may also be referred to as a terminal device. The terminal device may be a wireless terminal or a wired terminal. The wireless terminal may be a device that provides a user with voice and/or another service data connectivity, a handheld device with a wireless connection function, or another processing device connected to a wireless modem. The wireless terminal may communicate with one or more core networks through a radio access network (Radio Access Network, RAN). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, the wireless terminal may be a device such as a personal communications service (Personal Communications Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile station (Mobile), a remote station (Remote Station), a remote terminal (Remote Terminal), an access terminal (Access Terminal), a user terminal (User Terminal), a user agent (User Agent). This is not limited herein.

It should be noted that the communications system may be an LTE communications system, or may be another communications system in the future, and this is not limited herein. FIG. 1 is a schematic diagram by using a 5G communications system as an example. The following application file is illustrated and described by using the 5G communications system as an example.

TB is a minimum transmission unit on a physical layer. One TB may include one or more code blocks (Code Block, CB). By using downlink transmission as an example, in a long term evolution (Long Term Evolution, LTE) system, after a network device sends data of one TB to user equipment by using a hybrid automatic repeat request (Hybrid Automatic Repeat request, HARQ) technology, the user equipment may send a feedback message to the network device by using a TB-based HARQ feedback mechanism. To be specific, the user equipment may use one bit to feed back the feedback message for the HARQ to the network device based on a decoding result of the TB. The feedback message may be, for example, an acknowledgment (Acknowledgment, ACK) message, or a negative ACK (Negative ACK, NACK) message. The ACK message herein is used to represent that the user equipment correctly receives the TB (that is, the TB is successfully decoded). The NACK message is used to represent that the user equipment fails to receive the TB (that is, the TB fails to be decoded). When receiving the NACK message, the network device resends the TB to the user equipment.

The 5G communications system may use larger bandwidth. Therefore, one TB sent by the network device to the user equipment may include more data. That is, one TB may include dozens of CBs. In addition, the 5G communications system may support different services, for example, an enhanced mobile broadband (enhanced Mobile Broadband, eMBB) service, a massive machine-type communications (massive Machine Type Communications, mMTC) service, an ultra-reliable low-latency communication (Ultra-reliable and low latency communications, URLLC) service, a multimedia broadcast multicast service (Multimedia Broadcast Multicast Service, MBMS) and a positioning service. Different services have different requirements for latency. For example, the URLLC service has a higher requirement for latency than the eMBB service for latency.

Therefore, to ensure a requirement for latency of a service having a higher requirement for latency, the 5G communications system allows the service having a higher requirement for latency to preempt a resource of a service having a lower requirement for latency to perform a sending operation. By using downlink data as an example, the network device may send URLLC service data to another user equipment on a time-frequency resource on which eMBB service data is sent to one user equipment. In this way, a TB carrying the URLLC service data causes strong interference on some CBs in a TB carrying the eMBB service data, to increase a probability that the CBs in the TB carrying the cMBB service data fail to be correctly received by the user equipment receiving the TB.

In this scenario, if a small quantity of CBs fail to be received, the CBs are retransmitted by still retransmitting an entire TB, leading to a relatively low retransmission efficiency. Therefore, a concept of CBG is disclosed in the 5G communications system. That is, one TB may include at least one CBG, and one CBG may include at least one CB. The user equipment may feed back the feedback message for the HARQ (for example, the NACK message) to the network device by using the CBG as a unit. The feedback message is used to represent CBGs in the TB that fail to be received by the user equipment. After receiving the feedback message, the network device may resend the CBG indicated by the feedback message to the user equipment, instead of retransmitting the entire TB. In this way, the retransmission efficiency can be improved.

FIG. 2 is a schematic diagram of CBG-based retransmission according to this application. As shown in the FIG. 2, for example, the network device sends (initially transmits) one TB including five CBGs to the user equipment in one slot, and it is assumed that the user equipment fails to decode a CBG 1 and a CBG 4. Therefore, after the network device receives a feedback message that is sent by the user equipment and that is used to indicate that the CBG 1 and the CBG 4 fail to be received, the network device may retransmit only the CBG 1 and CBG 4 to the user equipment, instead of retransmitting the entire TB. In this way, the retransmission efficiency can be improved.

Based on the CBG-based retransmission, the following describes user equipment cooperation in the 5G communications system. Details are as follows.

Still referring to FIG. 1, when the user equipment is located at an edge of the network coverage area, or an ambient environment of the user equipment have relatively strong interference on a network service, network quality of service of the user equipment is relatively poor, leading to poor user experience. Therefore, a user equipment cooperation mechanism is introduced to the 5G communications system. When the user equipment cooperation mechanism is used, one or more user equipments (that is, CUE) located in a network coverage central area or in a better network environment may assist the network device to retransmit CBGs in the TB to user equipment (that is, TUE) having poor network quality of service in a cell, to increase a probability that the TUE correctly decodes the TB, and to further improve network quality of the TUE. A person skilled in the art may understand that a future mobile communications system may still use terminology of CUE and TUE, or may use another terminology. Therefore, the embodiments of this application do not constitute a limitation on names of CUE and TUE in each communications system.

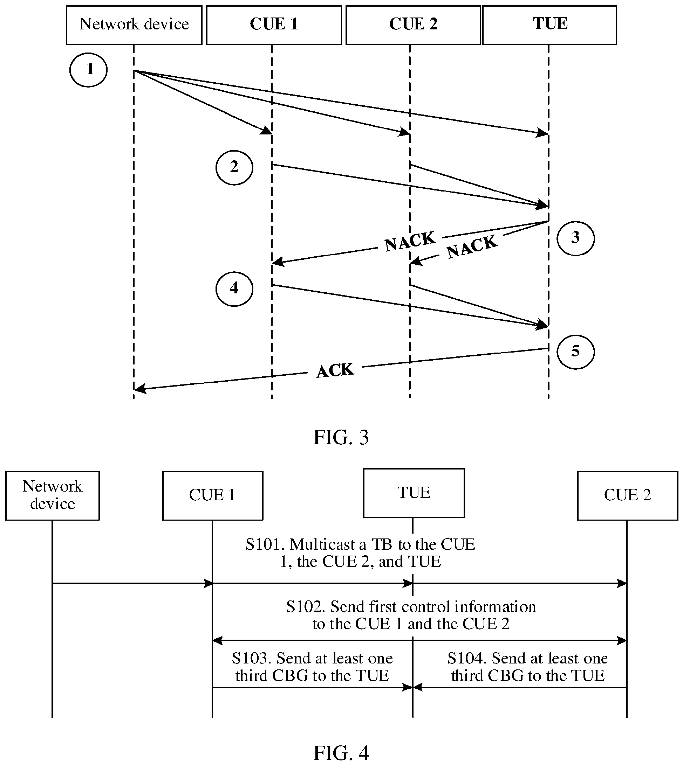

FIG. 3 is a schematic diagram of a user equipment cooperation process according to an embodiment of this application. Referring to FIG. 1 and FIG. 3, for example, CUE 1 and CUE 2 in a cell in which the TUE is located may assist to communicate with the TUE, and the following describes the user equipment cooperation process. In other words, the CUE 1 and the CUE 2 have a user equipment cooperation relationship with the TUE. The network device sends downlink data to the TUE by using a TB as a transmission unit. The TB herein may include at least one CBG, and one CBG may include at least one CB.

Step 1. When a user equipment cooperation mechanism is used, the network device may simultaneously send, in a multicasting manner, a TB that is sent to the TUE to the CUE 1, the CUE 2, and the TUE. After receiving the TB, the CUE 1, the CUE 2, and the TUE may decode the TB, that is, decode all CBGs included in the TB.

A phase in which the network device sends the TB to the CUE 1, the CUE 2, and the TUE may be referred to as a user equipment cooperation downlink phase (User Cooperation Downlink Phase, UC DL Phase).

Optionally, in some embodiments, the network device may further configure the CUE 1, the CUE 2, and the TUE to be a cooperation group, and allocate a cooperation group ID (Cooperation Group ID, CGID) to the cooperation group. Therefore, in this scenario, when sending the TB, the network device may carry the CGID, to enable the CUE 1, the CUE 2, and the TUE to learn, by using the CGID, that the TB multicast by the network device is the TB sent to the TUE. Alternatively, the network device may indicate, by using control signaling, to members of the cooperation group (that is, the CUE 1, the CUE 2, and the TUE) that an identity of the TUE is used as an identity of the cooperation group. In this scenario, when sending the TB, the network device may carry the identity of the TUE, to enable the CUE 1, the CUE 2, and the TUE to learn, by using the identity of the TUE, that the TB multicast by the network device is the TB sent to the TUE.

Step 2. The CUE 1 may send a CBG correctly decoded by the CUE 1 to the TUE through a sidelink, and the CUE 2 may send a CBG correctly decoded by the CUE 2 to the TUE through the sidelink. After receiving the CBGs sent by the CUE 1 and the CUE 2, the TUE may decode the CBGs.

Step 2 shows the first time that the CUE 1 and the CUE 2 retransmit the CBGs to the TUE.

Step 3. If the TUE fails to correctly decode one or more CBGs received in step 2, the TUE may send a NACK message to the CUE 1 and the CUE 2, to instruct the CUE 1 and the CUE 2 to resend the CBGs sent in step 2.

Step 4. After receiving the NACK message sent by the TUE, the CUE 1 and the CUE 2 may resend the CBGs sent in step 2 through the sidelink. After receiving the CBGs sent by the CUE 1 and the CUE 2, the TUE may decode the CBGs.

Step 4 shows the second time that the CUE 1 and the CUE 2 retransmit the CBGs to the TUE. Optionally, the CUE 1 and the CUE 2 may use a same modulation and coding scheme (Modulation and Coding Scheme, MCS) to retransmit the CBGs to the TUE in step 2 and step 4, or may use different MCSs to retransmit the CBGs to the TUE.

Step 5. If the TUE decodes the CBGs sent by the CUE 1 and the CUE 2, and decodes the TB sent by the network device, to successfully obtain TB data, the TUE may send an ACK message to the network device, to indicate to the network device that the TUE correctly receives the TB.

A phase in which the CUE 1 and the CUE 2 retransmit CBGs to the TUE may be referred to as a user equipment cooperation sidelink phase (User Cooperation Sidelink Phase, UC SL Phase). That is, in the user equipment cooperation sidelink phase, each CUE may retransmit the CBGs correctly decoded by the CUE to the TUE, to assist the TUE to decode the TB by retransmitting the CBG, to increase a probability that the TUE correctly decodes the TB, thereby improving network quality of the TUE. It should be noted that, in the user equipment cooperation sidelink phase, the CUE and the TUE may communicate on a licensed spectrum, or may communicate on an unlicensed spectrum.

However, because CBGs correctly received by the CUE 1 and the CUE 2 may be different, and the CUE 1 and the CUE 2 fail to learn of a receiving status of each other. Therefore, when the user equipment cooperation mechanism is used, the way in which the CUE 1 and the CUE 2 retransmit CBGs to the TUE is urgently to be provided.

The following uses the communications system shown in the FIG. 1 as an example, to describe the technical solutions of the embodiments of this application in detail by using some embodiments. The following several embodiments may be combined with each other, and a same or similar concept or process may not be described repeatedly in some embodiments.

FIG. 4 is a signaling flowchart of a data transmission method according to an embodiment of this application. This embodiment relates to a process in which first user equipment retransmits a CBG to the second user equipment based on first control information sent by second user equipment. The first user equipment may be CUE, and the second user equipment may be TUE. When user equipments cooperate with each other, one TUE may correspond to one or more CUEs that assist the TUE to communicate with a network device. This embodiment of this application uses the TUE corresponding to two CUEs (that is, CUE 1 and CUE 2) as an example, to describe the method in this embodiment of this application. As shown in the FIG. 4, the method may include the following steps.

S 101. The network device multicasts a TB to the CUE 1, the CUE 2, and the TUE.

Specifically, when the network device communicates with the TUE by using a user-assist mechanism, the network device may send the TB that is sent to the TUE to the CUE 1, the CUE 2, and the TUE in a multicasting manner, to enable the CUE 1, the CUE 2, and the TUE to receive the TB. The TB may include at least one first CBG, and each first CBG may include at least one CB. The phase is the user equipment cooperation downlink phase as described above.

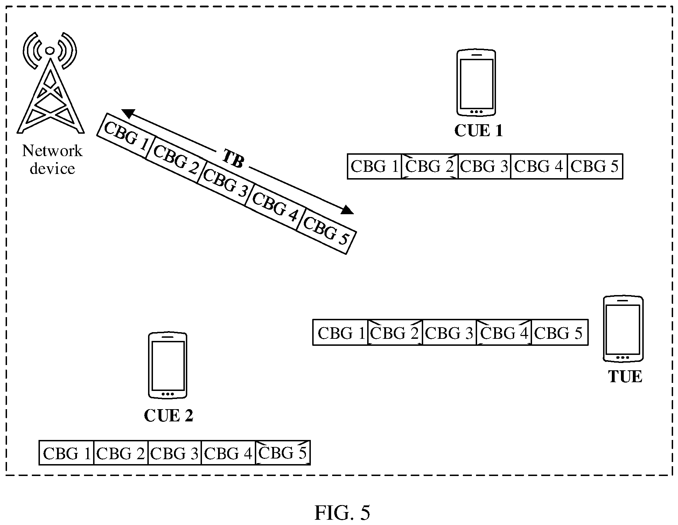

FIG. 5 is a schematic diagram of user equipment cooperation according to an embodiment of this application. As shown in FIG. 5, for example, a network device sends a TB including a CBG 1, a CBG 2, a CBG 3, a CBG 4, and a CBG 5 to the TUE, and by using a user-assist mechanism, the network device may multicast the TB to CUE 1, CUE 2, and the TUE. In this case, the CBG 1, the CBG 2, the CBG 3, the CBG 4, and the CBG 5 are all first CBGs.

When multicasting the TB, the network device may carry an identity of the TUE, to enable the CUE 1, the CUE 2, and the TUE to learn, by using the identity of the TUE, that the TB multicast by the network device is a TB sent to the TUE. Optionally, in some embodiments, when the CUE 1, the CUE 2, and the TUE are configured to be a cooperation group, the network device may further carry a CGID of the cooperation group when multicasting the TB, to enable the CUE 1, the CUE 2, and the TUE to learn, by using the CGID, that the TB multicast by the network device is a TB sent to the TUE.

S 102. The TUE sends first control information to the CUE 1 and the CUE 2.

Specifically, after receiving the TB sent by the network device, the TUE may decode the TB. Then, based on a decoding result of the TB, the TUE may learn of first CBGs included in the TB that fail to be decoded. The first CBGs failing to be decoded are first CBGs failing to be received by the TUE from the network device. In this embodiment, for convenience of distinction, the first CBG failing to be decoded by the TUE is referred to as a second CBG. Therefore, the TUE can simultaneously send the first control information to the CUE 1 and the CUE 2 based on at least one second CBG (that is the first CBG failing to be received by the TUE), to instruct the CUE 1 and the CUE 2 to send the at least one second CBG to the TUE by using the first control information.

Still referring to the example shown in the FIG. 5, it is assumed that after receiving the TB, the TUE fails to decode the CBG 2 and the CBG 4 of the TB. In this case, the CBG 2 and the CBG 4 arc the second CBGs as described above. In this scenario, the first control information sent by the TUE to the CUE 1 and the CUE 2 may be used to instruct the CUE 1 and the CUE 2 to send the CBG 2 and the CBG 4 to the TUE. In other words, the first control information is used to instruct the CUE 1 and the CUE 2 to retransmit the CBG 2 and the CBG 4 to the TUE.

In a specific implementation, the TUE may add the first control information to physical layer signaling or a media access control (Media Access Control, MAC) header, and send the physical layer signaling or the media access control header, to the CUE 1 and the CUE 2.

In some embodiments, the first control information may be referred to as, for example, sidelink control information. A person skilled in the art may understand that the first control information in a future mobile communications system may use terminology of sidelink control information, or may use another terminology. Therefore, this embodiment of this application does not constitute a limitation on a name of first control information in each communications system.

S103. The CUE 1 sends at least one third CBG to the TUE.

Specifically, after receiving the TB sent by the network device, the CUE 1 may decode the TB. Then, based on a decoding result of the TB, the CUE 1 may learn of which first CBGs included in the TB are successfully decoded by the CUE 1. The first CBGs successfully decoded are first CBGs correctly received by the CUE 1 from the network device. Therefore, after receiving the first control information sent by the TUE, the CUE 1 can determine, based on at least one second CBG indicated by the first control information, and first CBGs correctly received by the CUE 1, at least one "first CBG correctly received by the CUE 1 and failing to be received by the TUE". For convenience of distinction, the first CBG correctly received by the CUE 1 and failing to be received by the TUE is referred to as a third CBG.

When each of the at least one second CBG is a first CBG correctly received by the CUE 1, the at least one third CBG determined by the CUE 1 based on the at least one second CBG indicated by the first control information and the first CBG correctly received by the CUE 1 is the at least one second CBG. When some of the at least one second CBG are first CBGs correctly received by the CUE 1, the at least one third CBG determined by the CUE 1 based on the at least one second CBG indicated by the first control information and the first CBG correctly received by the CUE 1 is some of the at least one second CBG.

After determining the at least one third CBG, the CUE 1 may retransmit the at least one third CBG to the TUE, to enable the TUE to receive the at least one third CBG retransmitted by the CUE 1. In this way, the CUE 1 is enabled to send a CBG required by the TUE to the TUE, to improve retransmission efficiency between the CUE and the TUE. In a specific implementation, the CUE 1 may retransmit the at least one third CBG to the TUE through a sidelink.

Still referring to the example shown in the FIG. 5, it is assumed that after receiving the TB, the CUE 1 successfully decodes the CBG 1, the CBG 3, the CBG 4, and the CBG 5 of the TB. That is, the CBG 1, the CBG 3, the CBG 4, and the CBG 5 are first CBGs correctly received by the CUE 1 from the network device. In this scenario, after receiving the first control information used to instruct to send the CBG 2 and the CBG 4 and sent by the TUE, the CUE 1 may determine, based on the at least one second CBG (that is, the CBG 2 and the CBG 4) indicated by the first control information, and first CBGs (that is, the CBG 1, the CBG 3, the CBG 4, and the CBG 5) correctly received by the CUE 1, at least one "first CBG (that is, the third CBG) correctly received by the CUE 1 and failing to be received by the TUE".

In this example, because for the CBG 2 and the CBG 4, the CUE 1 correctly receives only the CBG 4, the CUE 1 may determine one third CBG, that is, the CBG 4. In this case, the third CBG determined by the CUE 1 is some of the at least one second CBG.

S104. The CUE 2 sends at least one third CBG to the TUE.

The third CBG is a first CBG correctly received by the CUE 2 from the network device, and a first CBG failing to be received by the TUE from the network device.

Specifically, after receiving the TB sent by the network device, the CUE 2 may decode the TB. Then, based on a decoding result of the TB, the CUE 2 may learn of which first CBGs included in the TB arc successfully decoded. The first CBGs successfully decoded are first CBGs correctly received by the CUE 2 from the network device. Therefore, after receiving the first control information sent by the TUE, the CUE 2 may determine, based on at least one second CBG indicated by the first control information, and first CBGs correctly received by the CUE 2, at least one "first CBG correctly received by the CUE 1 and failing to be received by the TUE", that is, the third CBG.

When each of the at least one second CBG is a first CBG correctly received by the CUE 2, the at least one third CBG determined by the CUE 2 based on the at least one second CBG indicated by the first control information and the first CBG correctly received by the CUE 2 is the at least one second CBG. When some of the at least one second CBG are first CBGs correctly received by the CUE 2, the at least one third CBG determined by the CUE 2 based on the at least one second CBG indicated by the first control information and the first CBG correctly received by the CUE 2 is some of the at least one second CBG.

After determining the at least one third CBG, the CUE 2 may retransmit the at least one third CBG to the TUE, to enable the TUE to receive the at least one third CBG retransmitted by the CUE 2. In this way, the CUE 2 is alternatively enabled to send the CBG required by the TUE to the TUE, to improve retransmission efficiency between the CUE and the TUE. In a specific implementation, the CUE 2 may retransmit the at least one third CBG to the TUE by using a sidelink.

Still referring to the example shown in the FIG. 5, it is assumed that after receiving the TB, the CUE 2 successfully decodes CBG 1, CBG 2, CBG 3 and CBG 4 of the TB. That is, the CBG 1, the CBG 2, the CBG 3 and the CBG 4 are first CBGs correctly received by the CUE 2 from the network device. In this scenario, after receiving the first control information used to instruct to send the CBG 2 and the CBG 4 and sent by the TUE, the CUE 2 may determine, based on at least one second CBG (that is, the CBG 2 and the CBG 4) indicated by the first control information, and first CBGs (that is, the CBG 1, the CBG 2, the CBG 3 and the CBG 4) correctly received by the CUE 2, at least one first CBG (that is, the third CBG) correctly received by the CUE 2 and failing to be received by the TUE.

In this example, because the CUE 2 correctly receives both the CBG 2 and the CBG 4, the CUE 2 may determine, in the foregoing manner, two third CBGs, namely, the CBG 2 and the CBG 4. In this case, the two third CBGs determined by the CUE 2 are both second CBGs indicated by the TUE.

A phase in which the CUE 1 and the CUE 2 retransmit the at least one third CBG to the TUE based on the first control information sent by the TUE may be the user equipment cooperation sidelink phase as described above.

In the data transmission method provided in the embodiments of this application, when a user equipment cooperation mechanism is used, after the CUE 1 and the CUE 2 receive the TB sent by the network device to the TUE, the CUE 1 and the CUE 2 may retransmit, based on the CBGs indicated by the TUE, and the CBGs correctly received by the CUE 1 and the CUE 2, the CBG required by the TUE to the TUE, to improve efficiency of CBG retransmission between the CUE 1 and the TUE and between the CUE 2 and the TUE, thereby improving resource usage.

Optionally, in some embodiments, the first control information is further used to indicate a time-frequency resource used when the CUE 1 and the CUE 2 sends the at least one second CBG, that is, the time-frequency resource used when the CUE 1 and the CUE 2 retransmit the at least one third CBG to the TUE by using the sidelink. A size of the time-frequency resource relates to a quantity of the at least one second CBGs. For example, when the at least one second CBG includes two second CBGs, the time-frequency resource may be a time-frequency resource used to send two CBGs; when the at least one second CBG includes three second CBGs, the time-frequency resource may be a time-frequency resource used to send three CBGs; and so on. Optionally, a width of a frequency domain of the time-frequency resource is not limited in the embodiments of this application.

By using the CUE 1 as an example, in a 5G communications system, sizes of CBGs in a same TB are approximately same. When mapping the CBGs onto a time-frequency resource having a same width of a frequency domain, time lengths occupied by the CBGs on time domain may be considered the same. Therefore, after receiving the first control information, the CUE 1 may determine, based on a time-frequency resource indicated by the first control information, and a time length occupied by one CBG on the time-frequency resource, a time domain location of each of the at least one second CBG on the time-frequency resource.

Then, the CUE 1 may determine, based on an arrangement location of the determined at least one third CBG in the at least one second CBG, a time domain location (that is, a time domain symbol of the at least one third CBG) of the at least one third CBG on a time-frequency resource corresponding to the sidelink. To be specific, an arrangement location of the at least one third CBG in a sequence formed by the at least one second CBG is used as the time domain location of the at least one third CBG on the time-frequency resource.

Finally, the CUE 1 may map the at least one third CBG onto the time-frequency resource based on the time domain location of the at least one third CBG on the time-frequency resource and send the at least one third CBG to the TUE. Correspondingly, after receiving the at least one third CBG sent by the CUE 1 on the time-frequency resource, the TUE can accurately determine, based on the time domain location of the at least one third CBG sent by the CUE 1 on the time-frequency resource, a second CBG corresponding to the at least one third CBG sent by the CUE 1.

Correspondingly, after determining the at least one third CBG, the CUE 2 may alternatively map, in the manner shown in the CUE 1, the at least one third CBG determined by the CUE 2 onto the time-frequency resource and send the at least one third CBG to the TUE. Because both the CUE 1 and the CUE 2 use the arrangement location of the at least one third CBG in the at least one second CBG as the time domain location of the at least one third CBG on the time-frequency resource, the CUE 1 and the CUE 2 are enabled to send a same CBG to the TUE on a same time-frequency resource, to increase a probability that the TUE correctly receives the CBG.

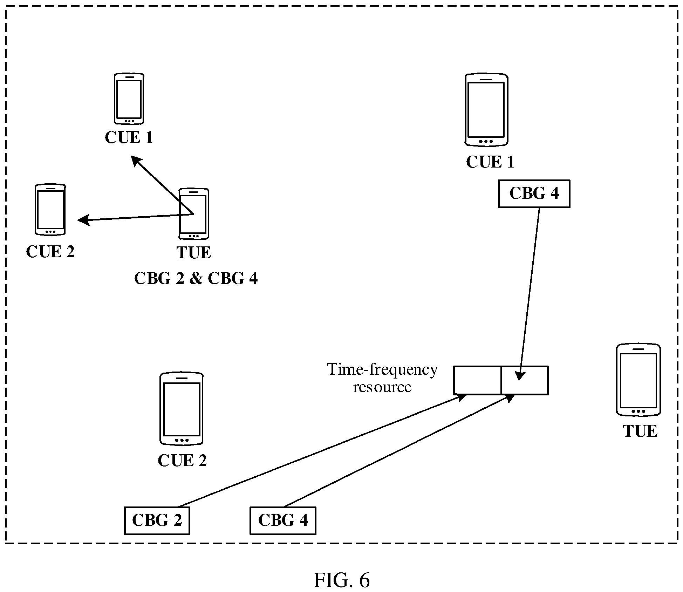

FIG. 6 is a schematic diagram of another user equipment cooperation according to an embodiment of this application. Referring to FIG. 5 and FIG. 6, for example, the first control information sent by the TUE to the CUE 1 and the CUE 2 is used to instruct the CUE 1 and the CUE 2 to send the CBG 2 and the CBG 4 to the TUE. Then, the TUE may use the first control information to indicate a time-frequency resource used when the CUE 1 and the CUE 2 send the CBG 2 and the CBG 4. In this example, the time-frequency resource may be a time-frequency resource used to send two CBGs.

The CUE 1 determines, based on the time-frequency resource indicated by the first control information, time domain locations of the CBG 2 and the CBG 4 in the at least one second CBG (that is, the CBG 2 and the CBG 4) on the time-frequency resource. In this case, the CBG 2 is located at a first time domain location of the time-frequency resource, and the CBG 4 is located at a second time domain location of the time-frequency resource. Then, the CUE 1 may determine one third CBG (that is, the CBG 4) based on the at least one second CBG (that is, the CBG 2 and the CBG 4), and first CBGs (the CBG 1, the CBG 3, the CBG 4, and the CBG 5) correctly received by the CUE 1. The CBG 4 is located at a second location in the at least one second CBG (that is, a sequence formed by the CBG 2 and the CBG 4). In this example, the CUE 1 may determine to map the CBG 4 onto a second time domain location (that is, the determined time domain location of the CBG 4) of the time-frequency resource indicated by the first control information. In this way, after the CUE 1 maps the CBG 4 onto the second time domain location of the time-frequency resource and sends the CBG 4 to the TUE, the TUE can accurately learn, based on the time domain location of the CBG 4, that the CBG is the CBG 4 in the at least one second CBG. It should be noted that, because the CUE 1 fails to correctly receive the CBG 2, the CUE 1 may send no information on the first time domain location of the time-frequency resource.

Correspondingly, the CUE 2 determines, based on the time-frequency resource indicated by the first control information, time domain locations of the CBG 2 and the CBG 4 in the at least one second CBG (that is, the CBG 2 and the CBG 4) on the time-frequency resource. Then, the CUE 2 may determine one third CBG (that is, the CBG 2 and the CBG 4) based on at least one second CBG (that is, the CBG 2 and the CBG 4), and first CBGs (the CBG 1, the CBG 2, the CBG 3 and the CBG 4) correctly received by the CUE 2. The CBG 2 is located at a first location in the at least one second CBG (that is, the sequence formed by the CBG 2 and the CBG 4), and the CBG 4 is located at the second location in the at least one second CBG (that is, the sequence formed by the CBG 2 and the CBG 4). In this example, the CUE 2 may determine to map the CBG 2 onto the first time domain location of the time-frequency resource indicated by the first control information, and map the CBG 4 onto the second time domain location of the time-frequency resource indicated by the first control information. In this way, after the CUE 2 maps the CBG 2 onto the first time domain location of the time-frequency resource indicated by the first control information, maps the CBG 4 onto the second time domain location of the time-frequency resource, and sends the CBG 2 and the CBG 4 to the TUE, the TUE can accurately learn, based on the time domain locations of the CBG 2 and the CBG 4, which is the CBG 2 and which is the CBG 4.

In the foregoing manner, both the CUE 1 and the CUE 2 are enabled to send the CBG 4 to the TUE on the second time domain location of the time-frequency resource, to increase a probability that the TUE correctly receives the CBG 4.

In the data transmission method provided in the embodiments of this application, when a user equipment cooperation mechanism is used, the CUE 1 and the CUE 2 may send a same CBG to the TUE on a same time-frequency resource, to increase a probability that the TUE correctly receives the CBG, and further to improve efficiency of CBG retransmission between the TUE and the CUE 1 and the CUE 2, thereby improving resource usage.

Optionally, in some embodiments, the first control information is further used to indicate a transmission parameter used when the CUE 1 and the CUE 2 sends the at least one second CBG. The transmission parameter herein may include, for example, one or more of the following: a transfer mode, a quantity of receive antenna ports, and a modulation and coding scheme. The transfer mode herein may be, for example, open-loop multiple-input multiple-output (Multiple-Input Multiple-Output, MIMO), closed-loop MIMO, multi-user multiple-input multiple-output (Multi-User Multiple-Input Multiple-Output, MU-MIMO), or beamforming (Beamforming). The modulation scheme herein may be any one of the following: binary phase shift keying (Binary Phase Shift Keying, BPSK), quadrature phase shift keying (Quadrature Phase Shift Keying, QPSK), 16 quadrature amplitude modulation (Quadrature Amplitude Modulation, QAM), 64 QAM, 256 QAM, and the like.

When sending at least one third CBG to the TUE, the CUE 1 and the CUE 2 may use a transmission parameter indicated by the first control information to send the at least one third CBG to the TUE. Correspondingly, the TUE may use the transmission parameter to receive the at least one third CBG sent by the CUE 1 and the CUE 2. In this way, a same transmission parameter can be used for communication between the CUE 1 and the TUE and between the CUE 2 and the TUE, to ensure that normal communication between the CUE 1 and the TUE and between the CUE 2 and the TUE is not interfered.

In the data transmission method provided in the embodiments of this application, when a user equipment cooperation mechanism is used, the CUE 1 and the CUE 2 may communication with the TUE based on a transmission parameter indicated by the TUE, to ensure normal communication between the CUE 1 and the TUE and between the CUE 2 and the TUE.

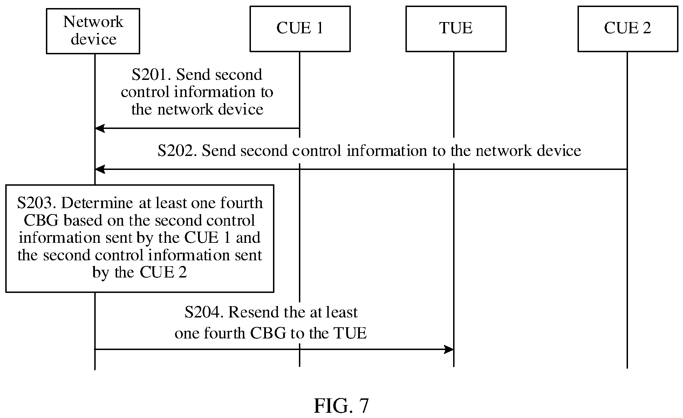

FIG. 7 is a signaling flowchart of another data transmission method according to an embodiment of this application. This embodiment relates to a process in which the network device retransmits, based on second control information sent by the CUE 1 and the CUE 2, a CBG failing to be received by both the CUE 1 and the CUE 2 to the TUE. As shown in FIG. 7, after S101, the method may further include the following steps.

S201. The CUE 1 sends the second control information to the network device.

Specifically, after receiving the TB sent by the network device, the CUE 1 may decode the TB. Then, based on a decoding result of the TB, the CUE 1 may learn of which first CBGs included in the TB are successfully decoded (that is, correctly received) by the CUE 1, and which first CBGs included in the TB fail to be decoded (that is, failing to be received) by the CUE 1. Therefore, the CUE 1 may send, based on the decoding result of the TB, the second control information used to indicate a first CBG failing to be received by the CUE 1, and/or a first CBG correctly received by the CUE 1 to the network device, to enable the network device to learn of a receiving result of the CUE 1 by using the second control information. Optionally, the second control information may be referred to as, for example, a feedback message for HARQ, and is carried in physical layer signaling.

The manner in which the second control information is used to indicate a first CBG failing to be received by the CUE 1, and/or a first CBG correctly received by the CUE 1 is not limited in this embodiment. For example, the second control information may include a bitmap (Bitmap), to indicate, by using the bitmap, the first CBG failing to be received by the CUE 1, and/or a first CBG correctly received by the CUE 1. Each bit in the bitmap corresponds to one first CBG. For example, when the bit is a first value, it indicates that the first CBG corresponding to the bit is correctly received by first user equipment, and when the bit is a second value, it indicates that the first CBG corresponding to the bit fails to be received by the first user equipment. Optionally, when the first value is 1, the second value may be 0. Alternatively, when the first value is 0, the second value may be 1.

Optionally, a table (Table) may further be preset between the CUE 1 and the network device. The table may include a plurality of combinations of first CBGs failing to be received by the CUE 1, and/or a first CBG correctly received by the CUE 1. In the table, each combination may correspond to one sequence. For example, a combination corresponding to a sequence number 1 in the table may be that, in the TB, a first first CBG is a first CBG correctly received, and other first CBGs are first CBGs failing to be received. A combination corresponding to a sequence number 2 in the table may be that, in the TB, a second first CBG is a first CBG correctly received, and other first CBGs are first CBGs failing to be received. All combinations are arranged in this way. In this way, by adding sequence numbers in the table to the second control information, the CUE 1 may indicate a first CBG failing to be received by the CUE 1, and/or a first CBG correctly received by the CUE 1.

In a specific implementation, the sequence numbers in the table may be expressed in a form of bits. For example, the preset table between the CUE 1 and the network device includes 32 symbols, and the CUE 1 may occupy 5 bits locations in the second control information to indicate any symbol in the 32 sequence numbers. For example, "00001" represents the sequence number 1 in the table, and the "00010" represents the sequence number 2.

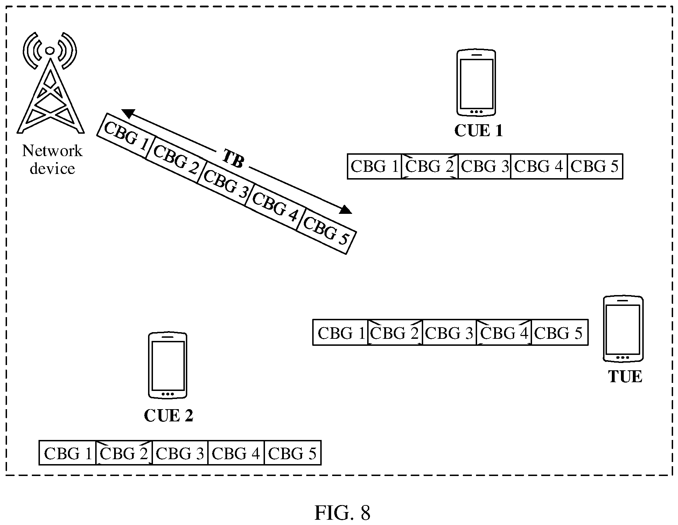

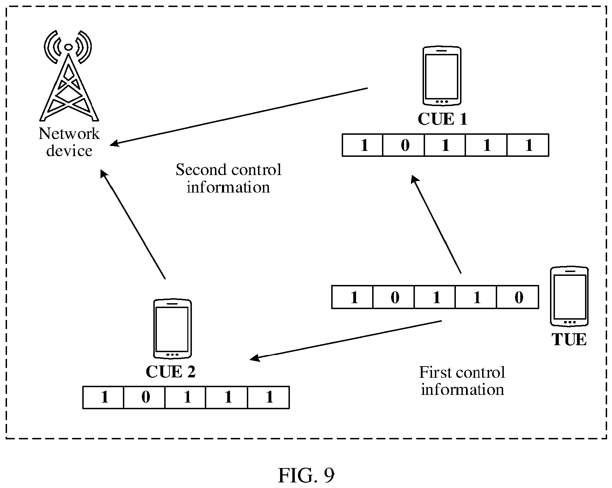

FIG. 8 is a schematic diagram of still another user equipment cooperation according to an embodiment of this application. FIG. 9 is a schematic diagram of still another user equipment cooperation according to an embodiment of this application. Referring to FIG. 8 and FIG. 9, a bit of 0 represents failed receiving, and a bit of 1 represents correct receiving. Still by using the example in which the network device sends the TB including the CBG 1, the CBG 2, the CBG 3, the CBG 4, and the CBG 5 to the TUE, in this case, the CBG 1, the CBG 2, the CBG 3, the CBG 4, and the CBG 5 are all first CBGs.

It is assumed that after receiving the TB, CUE 1 successfully decodes the CBG 1, the CBG 3, the CBG 4, and the CBG 5 of the TB. That is, the CBG 1, the CBG 3, the CBG 4, and the CBG 5 are first CBGs correctly received by the CUE 1 from the network device, and the CBG 2 is a first CBG failing to be received by the CUE 1 from the network device. In this scenario, the CUE 1 may send the second control information carrying a bitmap of "10111" to the network device, to represent, by using the bitmap, that the CBG 1, the CBG 3, the CBG 4, and the CBG 5 are correctly received, and the CBG 2 fails to be received.

Optionally, in some embodiments, the first control information sent by the TUE to the CUE may alternatively include a bitmap, to indicate, by using the bitmap, a first CBG failing to be received by the TUE (that is, a second CBG), and/or to indicate a first CBG correctly received by the TUE, to implicitly indicate at least one second CB that the TUE requires the CUE 1 and the CUE 2 to retransmit.

Referring to FIG. 8 and FIG. 9, a bit of 0 represents failed receiving, and a bit of 1 represents correct receiving. It is assumed that after receiving the TB, the TUE successfully decodes the CBG 1, the CBG 3, and the CBG 5 of the TB. That is, the CBG 1, the CBG 3, and the CBG 5 are first CBGs correctly received by the TUE from the network device, and the CBG 2 and the CBG 4 are first CBGs failing to be received by the TUE from the network device. In this scenario, the TUE may send the first control information carrying a bitmap of "10101" to the CUE 1 and the CUE 2, to implicitly instruct, by using the bitmap, the CUE 1 and the CUE 2 to retransmit the CBG 2 and the CBG 4 to the TUE.

S202. The CUE 2 sends the second control information to the network device.

Specifically, after receiving the TB sent by the network device, the CUE 2 may decode the TB. Then, based on a decoding result of the TB, the CUE 2 may learn of which first CBGs included in the TB are successfully decoded (that is, correctly received) by the CUE 2, and which first CBGs included in the TB fail to be decoded (that is, failing to be received) the CUE 2. Therefore, the CUE 2 may send, based on the decoding result of the TB, the second control information used to indicate a first CBG failing to be received by the CUE 2, and/or a first CBG correctly received by the CUE 2 to the network device, to enable the network device to learn of a receiving result of the CUE 2 by using the second control information.

Still by using the example in which the second control information includes a bitmap, with reference to FIG. 8 and FIG. 9, a bit of 0 represents failed receiving, and a bit of 1 represents correct receiving. It is assumed that after receiving the TB, the CUE 2 successfully decodes the CBG 1, the CBG 3, the CBG 4, and the CBG 5 of the TB. That is, the CBG 1, the CBG 3, the CBG 4, and the CBG 5 are first CBGs correctly received by the CUE 2 from the network device, and the CBG 2 is a first CBG failing to be received by the CUE 2 from the network device. In this scenario, the CUE 2 may send the second control information carrying a bitmap of " 10111" to the network device, to represent, by using the bitmap, that the CBG 1, the CBG 3, the CBG 4, and the CBG 5 are correctly received, and the CBG 2 fails to be received.

S203. The network device determines at least one fourth CBG based on the second control information sent by the CUE 1 and the second control information sent by the CUE 2.

Specifically, after receiving the second control information sent by the CUE 1 and the second control information sent by the CUE 2, the network device may learn of a decoding result of the CUE 1 and the CUE 2, so that the network device is enabled to determine whether a first CBG failing to be received by both CUEs (that is, the CUE 1 and the CUE 2) exists. For convenience of distinction, the first CBG failing to be received by both the CUEs (that is, the CUE 1 and the CUE 2) is referred to as a fourth CBG.

Still referring to the examples in S201 and S202, as described in the foregoing examples, the CBG 2 is a CBG failing to be received by the CUE 1 and the CUE 2. Therefore, the CBG 2 is the fourth CBG as described above.

S204. The network device resends at least one fourth CBG to the TUE.

Specifically, because network quality of the CUE 1 and the CUE 2 is better than that of the TUE, when both the CUE 1 and the CUE 2 fail to correctly receive the at least one fourth CBG, a possibility that the TUE correctly receives the at least one fourth CBG is relatively low. In this scenario, before the network device does not receive a feedback message for HARQ that is sent by the TUE, the network device may directly resend the at least one fourth CBG to the TUE, so that the TUE is enabled to receive the at least one fourth CBG retransmitted by the network device, to increase a probability that the TUE correctly receives the at least one fourth CBG, thereby increasing a probability that the TUE correctly decodes the TB, and further improving the network quality of the TUE. In this way, a case in which one or more first CBGs fail to be correctly received by the CUE 1 and the CUE 2 and the CUE 1 and the CUE 2 fail to assist the TUE may be effectively avoided, to improve reliability of user equipment cooperation.

Other first CBGs than the at least one fourth CBG are correctly received by the CUE 1 and/or the CUE 2. Therefore, if a first CBG failing to be correctly received by the TUE in the other first CBGs than the at least one fourth CBG exists, after receiving the TB sent by the network device, the TUE may still use the method shown in FIG. 4, to instruct the CUE 1 and/or the CUE 2 to retransmit the first CBGs.

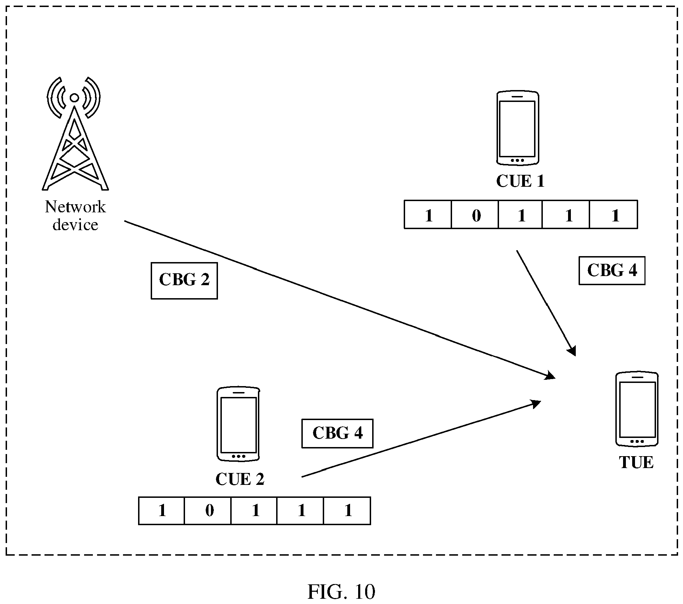

FIG. 10 is a schematic diagram of still another user equipment cooperation according to an embodiment of this application. Referring to FIG. 8, FIG. 9 and FIG. 10, after the network device multicasts the TB to the CUE 1, the CUE 2, and the TUE, because the CBG 2 fails to be correctly received by the CUE 1 and the CUE 2, and the CBG 2 and the CBG 4 fail to be correctly received by the TUE, the TUE may send first control information to the CUE 1 and the CUE 2, to instruct the CUE 1 and the CUE 2 to send the CBG 2 and the CBG 4 to the TUE. In addition, the CUE 1 and the CUE 2 may send second control information to the network device, to enable the network device to learn, by using the second control information, that the CBG 2 fails to be correctly received by all CUEs. In this scenario, the CUE 1 and the CUE 2 may use the manner shown in FIG. 4 to retransmit the CBG 4 to the TUE through a sidelink. The network device retransmits, in an existing manner of CBG retransmission, the CBG 2 to the TUE through a downlink, so that the TUE is enabled to obtain the CBG 2 from the network device, and obtain the CBG 4 from the CUE 1 and the CUE 2.

In a specific implementation, the CUE 1 and the CUE 2 may send the second control information to the network device through an uplink, and the TUE may send the first control information to the CUE 1 and the CUE 2 through a sidelink. The uplink and the sidelink occupy different bands, or the sidelink uses a non-licensed frequency band and the uplink uses a licensed frequency band. Alternatively, the CUE 1 and the CUE 2 may be user equipments supporting both communication on the sidelink and the uplink (where the CUE 1 and the CUE 2 may use a full-duplex mode to receive information when sending information).

Optionally, after S202, if after receiving the second control information sent by the CUE 1 and the second control information sent by the CUE 2, the network device determines, based on a decoding result, no first CBG failing to be received by both CUEs (that is, the CUE 1 and the CUE 2) exists, that is, all CBGs of the TB are correctly received by the CUE 1 and/or the CUE 2, the network device may not need to perform a retransmission operation on the TUE, and the CUE 1 and the CUE 2 only need to retransmit, in the manner shown in FIG. 4, a CBG required by the TUE to the TUE. In this way, times that the network device performs retransmission operations can be reduced, and overheads of downlink transmission can be reduced.

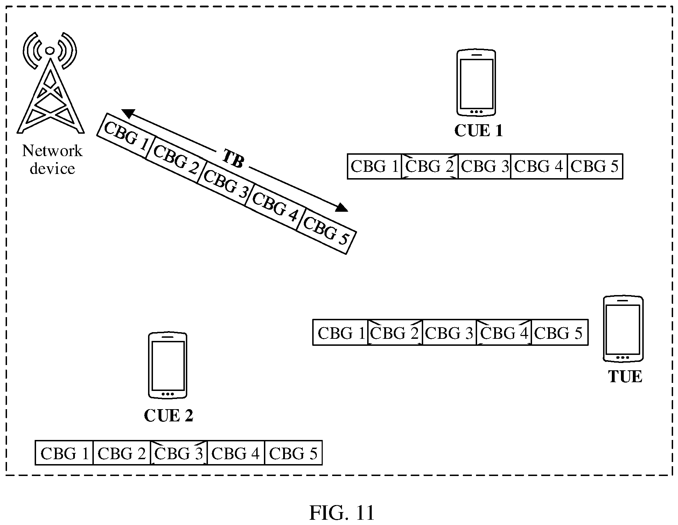

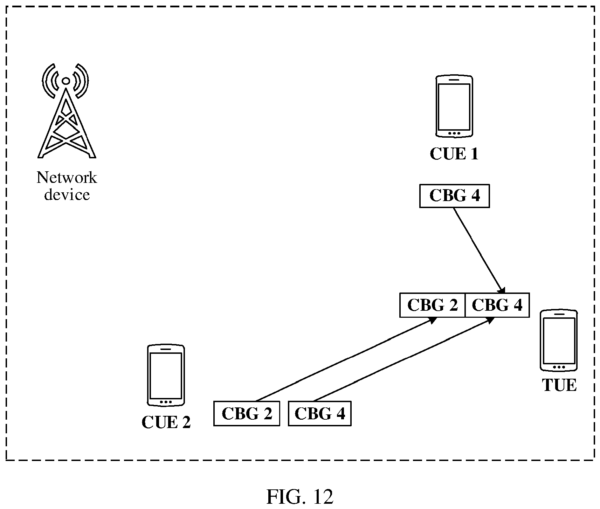

FIG. 11 is a schematic diagram of still another user equipment cooperation according to an embodiment of this application. FIG. 12 is a schematic diagram of still another user equipment cooperation according to an embodiment of this application. As shown in FIG. 11 and FIG. 12, still by using the example in which the network device sends the TB including the CBG 1, the CBG 2, the CBG 3, the CBG 4 and the CBG 5 to the TUE, in this case, the CBG 1, the CBG 2, the CBG 3, the CBG 4, and the CBG 5 are first CBGs.

It is assumed that after receiving the TB, the CUE 1 successfully decodes the CBG 1, the CBG 3, the CBG 4, and the CBG 5 of the TB. That is, the CBG 1, the CBG 3, the CBG 4, and the CBG 5 are first CBGs correctly received by the CUE 1 from the network device, and the CBG 2 is a first CBG failing to be received by the CUE 1 from the network device. In this scenario, the CUE 1 may send second control information carrying a bitmap of "10111" to the network device.

It is assumed that after receiving the TB, the CUE 2 successfully decodes the CBG 1, the CBG 2, the CBG 4, and the CBG 5 of the TB. That is, the CBG 1, the CBG 2, the CBG 4, and the CBG 5 are first CBGs correctly received by the CUE 2 from the network device, and the CBG 3 is a first CBG failing to be received by the CUE 2 from the network device. In this scenario, the CUE 2 may send second control information carrying a bitmap of "11011" to the network device.

It is assumed that after receiving the TB, the TUE successfully decodes the CBG 1, the CBG 3, and the CBG 5 of the TB. That is, the CBG 1, the CBG 3, and the CBG 5 are first CBGs correctly received by the TUE from the network device, and the CBG 2 and the CBG 4 are first CBGs (namely, second CBGs) failing to be received by the TUE from the network device.

Based on the foregoing information, the CUE 1 does not correctly receive the CBG 2, but the CBG 2 is correctly received by the CUE 2. Correspondingly, the CUE 2 does not correctly receive the CBG 3, but the CBG 3 is correctly received by the CUE 1. That is, the CUE 1 and the CUE 2 may obtain all the first CBGs of the TB. Therefore, after receiving the second control information sent by the CUE 1 and the CUE 2, the network device may learn, from the two pieces of second control information, that none of first CBG failing to be received by both the CUEs exists. Therefore, the network device may not need to perform a retransmission operation on the TUE, and the CUE 1 and the CUE 2 only need to retransmit a CBG required by the TUE to the TUE in the manner shown in FIG. 4 after receiving the first control information used to instruct to send the CBG 2 and the CBG 4 and sent by the TUE. In this example, the CUE 1 retransmits the CBG 4 to the TUE, and the CUE 2 retransmits the CBG 2 and the CBG 4 to the TUE. In this way, times that the network device performs retransmission operations can be reduced, and overheads of downlink transmission can be reduced.

In the data transmission method according to the embodiments of this application, when a user equipment cooperation mechanism is used, after the CUE 1 and the CUE 2 receive the TB sent by the network device to the TUE, the CUE 1 and the CUE 2 may send the second control information to the network device, to indicate, by using the second control information, a first CBG failing to be received, and/or a first CBG correctly received by the CUE 1 and the CUE 2, so that the network device may determine, based on the second control information of the CUE 1 and the CUE 2, at least one first CBG that fails to be correctly received by the CUE 1 and the CUE 2, to enable the network device to retransmit the first CBGs to the TUE. In this way, a case in which one or more first CBGs fail to be correctly received by the CUE 1 and the CUE 2 and the CUE 1 and the CUE 2 fail to assist the TUE can be effectively avoided, to improve reliability of user equipment cooperation.

In the foregoing embodiments, the example in which the CUE 1 and the CUE 2 retransmit the CBG to the TUE based on the first control information sent by the TUE is used to describe the data transmission method provided in the embodiments of this application. The following embodiments focus on a description of a process in which the CUE 1 and the CUE 2 actively retransmit the CBG to the TUE based on the decoding result of the TB by the CUE 1 and the CUE 2 after receiving the TB sent by the network device. In this embodiment of this application, for convenience of distinction, a manner in which the CUE 1 and the CUE 2 retransmit the CBG to the TUE based on the first control information sent by the TUE may be referred to as a user equipment cooperation mode triggered by the TUE, and a manner in which the CUE 1 and the CUE 2 actively retransmit the CBG to the TUE based on the decoding result of the TB by the CUE 1 and the CUE 2 may be referred to as a user equipment cooperation mode triggered by the CUE.

Before S101, the method may further include the following step.

The network device sends third control information to the CUE 1, the CUE 2, and the TUE.

Specifically, the third control information may be used to indicate a time-frequency resource used when the CUE 1 and the CUE 2 communicate with the TUE through a sidelink, that is, the time-frequency resource used when the CUE 1 and the CUE 2 retransmit a first CBG in the TB to the TUE through the sidelink. A size of the time-frequency resource relates to a quantity of first CBGs included in the TB. For example, when the TB includes five first CBGs, the time-frequency resource may be a time-frequency resource used to send five CBGs; and when the TB includes four first CBGs, the time-frequency resource may be a time-frequency resource used to send four CBGs. Optionally, a width of a frequency domain of the time-frequency resource is not limited in the embodiments of this application.

In a specific implementation, the network device may add the third control information to physical layer signaling, system information block (System Information Block, SIB) signaling, radio resource control (Radio Resource Control, RRC) signaling, an MAC header, downlink control signaling, or the like, to send the third control information to the CUE 1, the CUE 2, and the TUE.

In some embodiments, the third control information may be referred to as, for example, cooperation control information or downlink control information. A person skilled in the art may understand that the third control information in a future mobile communications system may use terminology of sidelink control information, or may use another terminology. Therefore, the embodiments of this application do not constitute a limitation on a name of third control information in each communications system.

During the implementation, after S101, the method may further include the following steps.

By using the CUE 1 as an example, after receiving the TB sent by the network device, the CUE 1 may decode the TB. Then, based on a decoding result of the TB, the CUE 1 may learn of which first CBGs included in the TB arc successfully decoded by the CUE 1. The first CBGs successfully decoded are first CBGs correctly received by the CUE 1 from the network device. Therefore, the CUE 1 can determine, based on arrangement locations of the first CBGs successfully decoded in the TB, time domain locations of the successfully decoded first CBGs on a time-frequency resource corresponding to the sidelink. In other words, the arrangement locations of the successfully decoded first CBGs in the TB are used as the time domain locations of the successfully decoded first CBGs on the time-frequency resource.

Then, the CUE 1 may map, based on the time domain locations of the successfully decoded first CBGs on the time-frequency resource, the successfully decoded first CBGs onto the time-frequency resource and send the successfully decoded first CBGs to the TUE. Correspondingly, after receiving the first CBGs successfully decoded and sent by the CUE 1 on the time-frequency resource, the TUE can accurately determine, based on the time domain locations of the first CBGs successfully decoded and sent by the CUE 1 on the time-frequency resource, which is the first CBG sent by the CUE 1.

Correspondingly, in the manner shown in the CUE 1, the CUE 2 may alternatively map the first CBG successfully decoded by the CUE 2 onto the time-frequency resource and send the first CBG to the TUE. Because both the CUE 1 and the CUE 2 use the arrangement location of the successfully decoded first CBG in the TB as the time domain location of the successfully decoded first CBG on the time-frequency resource, the CUE 1 and the CUE 2 are enabled to send a same CBG to the TUE on a same time-frequency resource, to increase a probability that the TUE correctly receives the CBG.

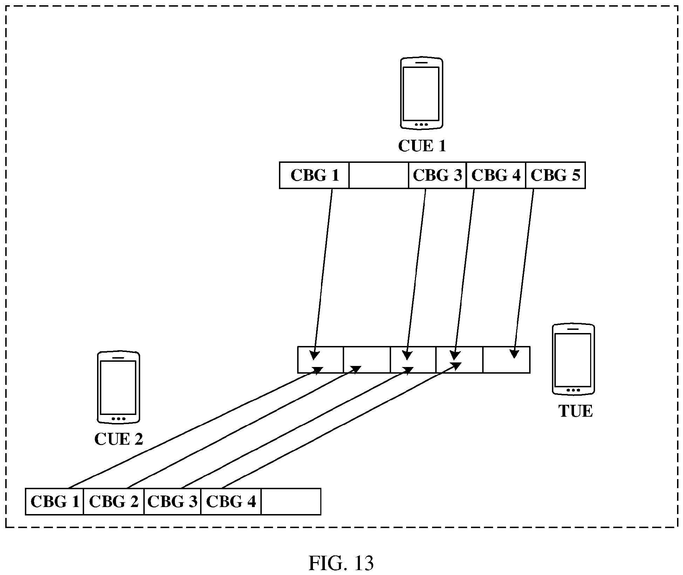

FIG. 13 is a schematic diagram of still another user equipment cooperation according to an embodiment of this application. Referring to FIG. 5 and FIG. 13, still by using the example in which the network device sends the TB including the CBG 1, the CBG 2, the CBG 3, the CBG 4 and the CBG 5 to TUE, in this case, the CBG 1, the CBG 2, the CBG 3, the CBG 4, and the CBG 5 are all first CBGs.

Then, before the network device multicasts the TB to the CUE 1, the CUE 2, and the TUE, the network device may send the third control information to the CUE 1, the CUE 2, and the TUE. The third control information is used to indicate a time-frequency resource used when the CUE 1 and the CUE 2 send the CBG in the TB. In this example, the time-frequency resource may be a time-frequency resource including a time domain resource of five CBGs.

In the user-assist mechanism, after the network device multicasts the TB to the CUE 1, the CUE 2, and the TUE, it is assumed that the first CBGs correctly received by the CUE 1 are the CBG 1, the CBG 3, the CBG 4, and the CBG 5, then the CUE 1 may determine to send the CBG 1 at a first time domain location of the time-frequency resource, send the CBG 3 at a third time domain location, send the CBG 4 at a fourth time domain location, and send the CBG 5 at a fifth time domain location. Because the CUE 1 fails to correctly receive the CBG 2, the CUE 1 may send no information on a second time domain location of the time-frequency resource.

It is assumed that the first CBGs correctly received by the CUE 2 are the CBG 1, the CBG 2, the CBG 3 and the CBG 4, then the CUE 2 may determine to send the CBG 1 on a first time domain location of the time-frequency resource, send the CBG 2 on a second time domain location, send the CBG 3 on a third time domain location, and send the CBG 4 on a fourth time domain location. Because the CUE 2 fails to receive the CBG 5, the CUE 2 may send no information on a fifth time domain location of the time-frequency resource.

In the foregoing manner, both the CUE 1 and the CUE 2 are enabled to send a same CBG to the TUE on a same time-frequency resource, to increase a probability that the TUE correctly receives the CBG.

In the data transmission method provided in the embodiments of this application, when a user equipment cooperation mechanism is used, the CUE 1 and the CUE 2 may send a same CBG to the TUE on a same time-frequency resource, to increase a probability that the TUE correctly receives the CBG, and further to improve efficiency of CBG retransmission between the TUE and the CUE 1 and between the TUE and the CUE 2, thereby improving resource usage.

Optionally, in some embodiments, the third control information is further used to indicate a transmission parameter used when the CUE 1 and the CUE 2 sends the first CBG in the TB. The transmission parameter herein may include, for example, one or more of the following: a transfer mode, a quantity of receive antenna ports, and a modulation and coding scheme.

When sending the first CBG correctly decoded by the CUE 1 and the CUE 2 to the TUE, the CUE 1 and the CUE 2 may use the transmission parameter indicated by the third control information to send the first CBG correctly decoded by the CUE 1 and the CUE 2 to the TUE. Correspondingly, the TUE may use the transmission parameter to receive the first CBG correctly decoded by the CUE 1 and the CUE 2 and sent by the CUE 1 and the CUE 2. In this way, a same transmission parameter may be used for communication between the CUE 1 and the TUE and between the CUE 2 and the TUE, to ensure the normal communication between the CUE 1 and the TUE and between the CUE 2 and the TUE.

In the data transmission method provided in the embodiments of this application, when a user equipment cooperation mechanism is used, the CUE 1 and the CUE 2 may communicate with the TUE based on the transmission parameter indicated by the TUE, to ensure normal communication between the CUE 1 and the TUE and between the CUE 2 and the TUE.

Optionally, in some embodiments, when the communications system supports not only a user equipment cooperation mode triggered by the TUE, but also a user equipment cooperation mode triggered by the CUE, the network device may further indicate a user equipment cooperation mode between the CUE 1 and the TUE and between the CUE 2 and the TUE by using the third control information.

For example, the network device may use one bit in the third control information to indicate the user equipment cooperation mode between the CUE 1 and the TUE and between the CUE 2 and the TUE. When the bit is 0, it indicates that the user equipment cooperation mode between the CUE 1 and the TUE and between the CUE 2 and the TUE is the user equipment cooperation mode triggered by the TUE, and when the bit is 1, it indicates that the user equipment cooperation mode between the CUE 1 and the TUE and between the CUE 2 and the TUE is the user equipment cooperation mode triggered by the CUE. Alternatively, when the bit is 1, it indicates that the user equipment cooperation mode between the CUE 1 and the TUE and between the CUE 2 and the TUE is the user equipment cooperation mode triggered by the TUE, and when the bit is 0, it indicates that the user equipment cooperation mode between the CUE 1 and the TUE and between the CUE 2 and the TUE is the user equipment cooperation mode triggered by the CUE.

It should be noted that, only when the third control information is used to indicate that the user equipment cooperation mode between the CUE 1 and the TUE and between the CUE 2 and the TUE is the user equipment cooperation mode triggered by the CUE, the third control information may further indicate a time-frequency resource, and/or a transmission parameter used when the CUE 1 and the CUE 2 communicate with the TUE through the sidelink. When the third control information is used to indicate that the user equipment cooperation mode between the CUE 1 and the TUE and between the CUE 2 and the TUE is the user equipment cooperation mode triggered by the TUE, the time-frequency resource, and/or the transmission parameter used when the CUE 1 and the CUE 2 communicate with the TUE through the sidelink may be indicated by the TUE by using the foregoing first control information. Details are not described again.

In the data transmission method provided in the embodiments of this application, when the communications system supports a plurality of user equipment cooperation modes, the network device may use the third control information to indicate the user equipment cooperation mode used by the CUE 1, the CUE 2, and the TUE, to expand an application scenario of user equipment cooperation, and to improve flexibility of the user equipment cooperation.

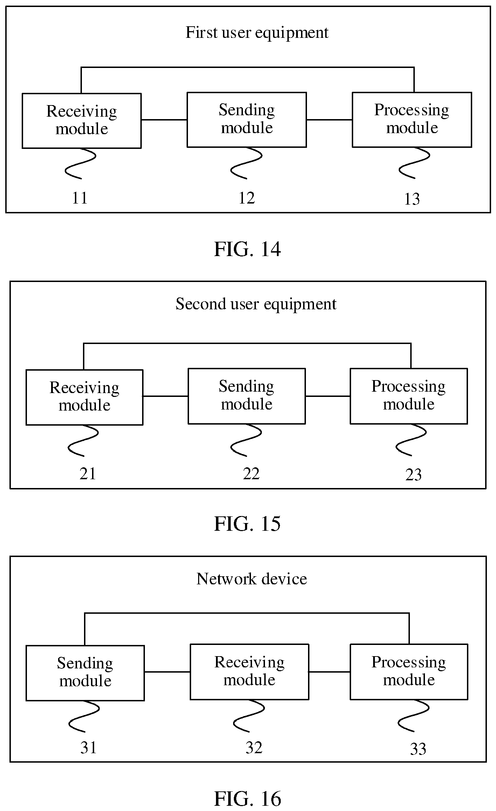

FIG. 14 is a schematic structural diagram of user equipment according to an embodiment of this application. As shown in FIG. 14, the user equipment may be first user equipment. The first user equipment may include: a receiving module 11 and a sending module 12.

The receiving module 11 is configured to receive a transport block sent by a network device to second user equipment, and first control information sent by the second user equipment. The transport block includes at least one first code block group CBG, the first control information is used to instruct the first user equipment to send at least one second CBG to the second user equipment, and the second CBG is a first CBG failing to be received by the second user equipment from the network device. The first user equipment may be user equipment configured to assist the second user equipment to communicate with the network device, or the first user equipment and the second user equipment are user equipments in a same cooperation group.

The sending module 12 is configured to send at least one third CBG to the second user equipment, and the third CBG is a first CBG correctly received by the first user equipment from the network device, and the third CBG is a first CBG failing to be received by the second user equipment from the network device.

Optionally, in some embodiments, the first control information is further used to indicate a time-frequency resource used when the first user equipment sends the at least one second CBG. During the implementation, the first user equipment may further include a processing module 13. The processing module 13 is configured to determine, based on an arrangement location of the at least one third CBG in the at least one second CBG, a time domain location of the at least one third CBG on the time-frequency resource. The sending module 12 is specifically configured to map the at least one third CBG onto the time-frequency resource and send the at least one third CBG to the second user equipment.

Optionally, in some embodiments, the first control information is further used to indicate a transmission parameter used when the first user equipment sends the at least one second CBG. The transmission parameter may include, for example, one or more of the following: a transfer mode, a quantity of receive antenna ports, and a modulation and coding scheme. During the implementation, the sending module 12 is specifically configured to send the at least one third CBG to the second user equipment by using the transmission parameter.

Optionally, in some embodiments, the sending module 12 is further configured to send, after the receiving module 11 receives the transport block sent by the network device to the second user equipment, second control information to the network device. The second control information is used to indicate a first CBG failing to be received by the first user equipment, and/or the second control information is used to indicate a first CBG correctly received by the first user equipment. For example, the second control information may include a bitmap, and one bit in the bitmap corresponds to one first CBG. When the bit is a first value, it indicates that the first CBG corresponding to the bit is correctly received by the first user equipment, and when the bit is a second value, it indicates that the first CBG corresponding to the bit fails to be received by the first user equipment.

Optionally, in some embodiments, the receiving module 11 is further configured to receive, before receiving the transport block sent by the network device to the second user equipment, third control information sent by the network device. The third control information is used to indicate a time-frequency resource used when the first user equipment sends the transport block to the second user equipment. During the implementation, the first user equipment may further include a processing module 13. The processing module 13 is configured to determine, based on an arrangement location of at least one correctly received first CBG in the transport block, a time domain location of the at least one correctly received first CBG on the time-frequency resource. The correctly received first CBG is a first CBG correctly received by the first user equipment from the network device. The sending module 12 is specifically configured to: map the at least one correctly received first CBG onto the time-frequency resource and send the at least one correctly received first CBG to the second user equipment.

Optionally, in some embodiments, the third control information is further used to indicate a transmission parameter used when the first user equipment sends the transport block. The transmission parameter may include, for example, one or more of the following: a transfer mode, a quantity of receive antenna ports, and a modulation and coding scheme. During implementation, the sending module 12 is specifically configured to: map the at least one correctly received first CBG onto the time-frequency resource, and send the at least one correctly received first CBG to the second user equipment by using the transmission parameter.

Optionally, in some embodiments, the third control information is further used to indicate a user equipment cooperation mode used between the first user equipment and the second user equipment.

The first user equipment provided in this embodiment of this application may perform the actions of the first user equipment in the foregoing method embodiments. Their implementation principles and technical effects are similar. Details are not described herein again.

FIG. 15 is a schematic structural diagram of another user equipment according to an embodiment of this application. As shown in FIG. 15, the user equipment may be second user equipment. The second user equipment may include: a receiving module 21 and a sending module 22.

The receiving module 21 is configured to receive a transport block sent by a network device, and the transport block includes at least one first code block group CBG.

The sending module 22 is configured to send first control information to at least one first user equipment. The first control information is used to instruct each first user equipment to send at least one second CBG to the second user equipment, and the second CBG is a first CBG failing to be received by the second user equipment from the network device. The first user equipment may be user equipment configured to assist the second user equipment to communicate with the network device, or the first user equipment and the second user equipment are user equipments in a same cooperation group.

The receiving module 21 is further configured to receive at least one third CBG sent by the at least one first user equipment. The third CBG is a first CBG correctly received by the first user equipment from the network device, and the third CBG is a first CBG failing to be received by the second user equipment from the network device.

Optionally, in some embodiments, the first control information is further used to indicate a time-frequency resource used when the first user equipment sends the at least one second CBG. During the implementation, the receiving module 21 is specifically configured to receive the at least one third CBG sent by the at least one first user equipment on the time-frequency resource. Correspondingly, the second user equipment may further include a processing module 23. The processing module 23 is configured to determine, based on a time domain location of at least one third CBG sent by each first user equipment on the time-frequency resource, a second CBG corresponding to the at least one third CBG sent by each first user equipment.

Optionally, in some embodiments, the first control information is further used to indicate a transmission parameter used when the first user equipment sends the at least one second CBG. The transmission parameter may include, for example, one or more of the following: a transfer mode, a quantity of receive antenna ports, and a modulation and coding scheme. During implementation, the receiving module 21 is specifically configured to receive, by using the transmission parameter, the at least one third CBG sent by the at least one first user equipment.

Optionally, in some embodiments, the receiving module 21 is further configured to receive, after receiving the at least one third CBG sent by the at least one first user equipment, at least one fourth CBG sent by the network device, and the at least one fourth CBG is a first CBG failing to be received by all of the at least one first user equipment from the network device.

Optionally, in some embodiments, the receiving module 21 is further configured to receive, before receiving the transport block sent by the network device, third control information sent by the network device, and after receiving the transport block sent by the network device, receive at least one first CBG correctly received and sent by the at least one first user equipment on the time-frequency resource. Correspondingly, the second user equipment may further include a processing module 23. The processing module 23 is configured to determine, based on a time domain location of the at least one first CBG correctly received and sent by each first user equipment on the time-frequency resource, a location of the at least one first CBG correctly received and sent by each first user equipment in the transport block. The third control information is used to indicate a time-frequency resource used when the at least one first user equipment sends the transport block to the second user equipment.

Optionally, in some embodiments, the third control information is further used to indicate a transmission parameter used when the first user equipment sends the transport block. The transmission parameter may include, for example, one or more of the following: a transfer mode, a quantity of receive antenna ports, and a modulation and coding scheme. During the implementation, the receiving module 21 is specifically configured to receive, by using the transmission parameter, at least one first CBG correctly received and sent by the at least one first user equipment on the time-frequency resource.

Optionally, in some embodiments, the third control information is further used to indicate a user equipment cooperation mode used between the first user equipment and the second user equipment.

The second user equipment provided in this embodiment of this application may perform the actions of the second user equipment in the foregoing method embodiments. Their implementation principles and technical effects are similar. Details are not described herein again.

FIG. 16 is a schematic structural diagram of a network device according to an embodiment of this application. As shown in FIG. 16, the network device may include: a sending module 31, a receiving module 32, and a processing module 33.

The sending module 31 is configured to multicast a transport block to at least one first user equipment and second user equipment, and the transport block includes at least one first code block group CBG. The first user equipment may be user equipment configured to assist the second user equipment to communicate with the network device, or the first user equipment and the second user equipment are user equipments in a same cooperation group.

The receiving module 32 is configured to receive second control information sent by each first user equipment, and the second control information is used to indicate a first CBG failing to be received by the first user equipment from the network device, and/or the second control information is used to indicate a first CBG correctly received by the first user equipment.

The processing module 33 is configured to determine at least one fourth CBG based on the second control information sent by each first user equipment, and the at least one fourth CBG is a first CBG failing to be received by all of the at least one first user equipment from the network device.

The sending module 31 is further configured to resend the at least one fourth CBG to the second user equipment.

Optionally, in some embodiments, the second control information includes a bitmap, and one bit in the bitmap corresponds to one first CBG. When the bit is a first value, it indicates that the first CBG corresponding to the bit is correctly received by the first user equipment, and when the bit is a second value, it indicates that the first CBG corresponding to the bit fails to be received by the first user equipment.

Optionally, in some embodiments, the sending module 31 is further configured to send, before multicasting the transport block to the at least one first user equipment and the second user equipment, third control information to the at least one first user equipment and the second user equipment. The third control information is used to indicate a time-frequency resource used when the first user equipment sends the transport block to the second user equipment.

Optionally, in some embodiments, the third control information is further used to indicate a transmission parameter used when the first user equipment sends the transport block.

Optionally, in some embodiments, the third control information is further used to indicate a user equipment cooperation mode used between the first user equipment and the second user equipment.

The network device provided in this embodiment of this application may perform the actions of the network device in the foregoing method embodiments. Their implementation principles and technical effects are similar. Details are not described herein again.

It should be noted that, it should be understood that the sending module of the first user equipment, the second user equipment and the network device in an actual implementation may be a transmitter, the receiving module in an actual implementation may be a receiver. The processing module may be implemented in a form of invoking software by using a processing element, or may be implemented in a form of hardware. For example, the processing module may be an independent processing clement, or may be integrated in a chip of the foregoing device for implementation. In addition, the processing module may alternatively be stored in a memory of the foregoing device in a form of program code. The program code is invoked by a processing element of the foregoing device and performs the function of the foregoing processing module. In addition, all or some of the modules may be integrated together, or may be independently implemented. The processing element herein may be an integrated circuit and has a signal processing capability. In an implementation process, steps in the foregoing methods or the foregoing modules can be implemented by using a hardware integrated logical circuit in a processor clement, or by using instructions in a form of software.

For example, the foregoing modules may be one or more integrated circuits configured to implement the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the foregoing modules is implemented in a form in which a processing element invokes program code, the processing element may be a general-purpose processor, for example, a central processing unit (Central Processing Unit, CPU) or another processor that can invoke the program code. For another example, the modules may be integrated together, and are implemented in a form of a system (system-on-a-chip, SOC).

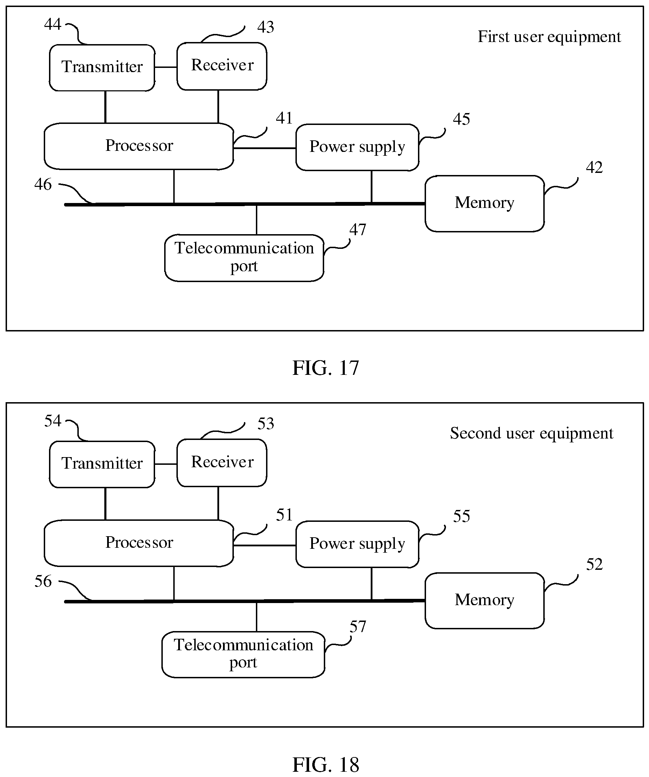

FIG. 17 is a schematic structural diagram of another user equipment according to an embodiment of this application. As shown in FIG. 17, the user equipment may be first user equipment, and the first user equipment may include: a processor 41 (for example, a CPU), a memory 42, a receiver 43, and a transmitter 44. The receiver 43 and the transmitter 44 are coupled to the processor 41. The processor 41 controls a receiving action of the receiver 43, and the processor 41 controls a sending action of the transmitter 44. The memory 42 may include a high-speed RAM memory, or may further include a nonvolatile memory NVM, for example, at least one magnetic disk memory. The memory 42 may store various instructions, to implement various processing functions and implement method steps of the embodiments of this application. Optionally, the first user equipment in this embodiment of this application may further include: a power supply 45, a communications bus 46, and a telecommunication port 47. The receiver 43 and the transmitter 44 may be integrated in a transceiver of the first user equipment, or may be an independent transceiver antenna on the first user equipment. The communications bus 46 is configured to implement a communication connection between elements. The telecommunication port 47 is configured to implement connection and communication between the first user equipment and another peripheral.

In this embodiment of this application, the memory 42 is configured to store computer-executable program code, and the program code includes an instruction. When the processor 41 executes the instruction, the instruction enables the processor 41 to perform a processing action of the first user equipment in the foregoing method embodiments, enables the transmitter 44 to perform a sending action of the first user equipment in the foregoing method embodiments, and enables the receiver 43 to perform a receiving action of the first user equipment in the foregoing method embodiments. Their implementation principles and technical effects are similar. Details are not described herein again.

FIG. 18 is a schematic structural diagram of another user equipment according to an embodiment of this application. As shown in FIG. 18, the user equipment may be second user equipment, and the second user equipment may include: a processor 51 (for example, a CPU), a memory 52, a receiver 53, and a transmitter 54. The receiver 53 and the transmitter 54 are coupled to the processor 51. The processor 51 controls a receiving action of the receiver 53, and the processor 51 controls a sending action of the transmitter 54. The memory 52 may include a high-speed RAM memory, or may further include a nonvolatile memory NVM, for example, at least one magnetic disk memory. The memory 52 may store various instructions, to implement various processing functions and implement method steps of the embodiments of this application. Optionally, the second user equipment in this embodiment of this application may further include: a power supply 55, a communications bus 56, and a telecommunication port 57. The receiver 53 and the transmitter 54 may be integrated in a transceiver of the second user equipment, or may be an independent transceiver antenna on the second user equipment. The communications bus 56 is configured to implement a communication connection between elements. The telecommunication port 57 is configured to implement connection and communication between the second user equipment and another peripheral.

In this embodiment of this application, the memory 52 is configured to store computer-executable program code, and the program code includes an instruction. When the processor 51 executes the instruction, the instruction enables the processor 51 to perform a processing action of the second user equipment in the foregoing method embodiments, enables the transmitter 54 to perform a sending action of the second user equipment in the foregoing method embodiments, and enables the receiver 53 to perform a receiving action of the second user equipment in the foregoing method embodiments. Their implementation principles and technical effects are similar. Details are not described herein again.

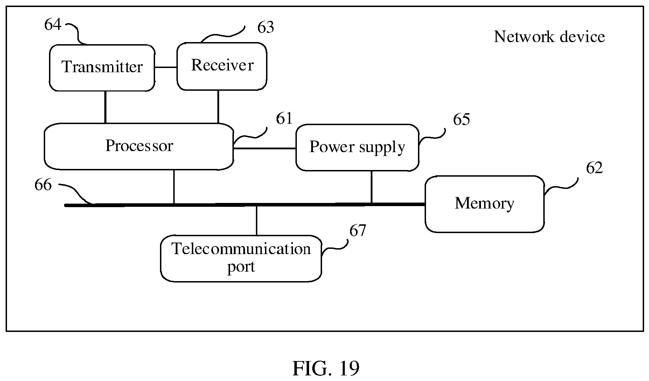

FIG. 19 is a schematic structural diagram of another network device according to an embodiment of this application. As shown in FIG. 19, the network device may include: a processor 61 (for example, a CPU), a memory 62, a receiver 63, and a transmitter 64. The receiver 63 and the transmitter 64 are coupled to the processor 61. The processor 61 controls a receiving action of the receiver 63, and the processor 61 controls a sending action of the transmitter 64. The memory 62 may include a high-speed RAM memory, or may further include a nonvolatile memory NVM, for example, at least one magnetic disk memory. The memory 62 may store various instructions, to implement various processing functions and implement method steps of the embodiments of this application. Optionally, the network device in this embodiment of this application may further include: a power supply 65, a communications bus 66, and a telecommunication port 67. The receiver 63 and the transmitter 64 may be integrated in a transceiver of the network device, or may be an independent transceiver antenna on the network device. The communications bus 66 is configured to implement a communication connection between elements. The telecommunication port 67 is configured to implement connection and communication between the network device and another peripheral.

In this embodiment of this application, the memory 62 is configured to store computer-executable program code, and the program code includes an instruction. When the processor 61 executes the instruction, the instruction enables the processor 61 to perform a processing action of the network device in the foregoing method embodiments, enables the transmitter 64 to perform a sending action of the network device in the foregoing method embodiments, and enables the receiver 63 to perform a receiving action of the network device in the foregoing method embodiments. Their implementation principles and technical effects arc similar. Details arc not described herein again.

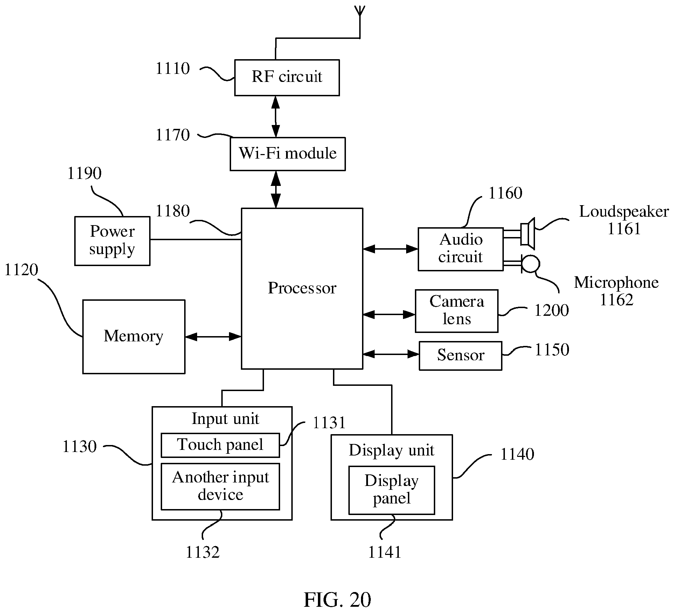

According to the foregoing embodiments, the user equipment in the embodiments of this application may be a mobile phone, a tablet computer or another wireless terminal. Therefore, for example, the user equipment is a mobile phone, and FIG. 20 is a structural block diagram of user equipment being a mobile phone according to an embodiment of this application. Referring to FIG. 20, the mobile phone may include: components such as a radio frequency (Radio Frequency, RF) circuit 1110, a memory 1120, an input unit 1130, a display unit 1140, a sensor 1150, an audio circuit 1160, a wireless fidelity (wireless fidelity, Wi-Fi) module 1170, a processor 1180, and a power supply 1190. A person skilled in the art may understand that a structure of the mobile phone shown in FIG. 20 does not constitute a limitation on the mobile phone, and the mobile phone may include more or fewer components than those shown in the figure, or some components may be combined, or different component arrangements may be used.

The following specifically describes the components of the mobile phone with reference to FIG. 20.

The RF circuit 1110 may be configured to send and receive a signal in an information sending and receiving process or a call process. For example, the RF circuit 1110 receives downlink information from a base station, then delivers the downlink information to the processor 1180 for processing, and sends uplink data to the base station. Usually, the RF circuit includes, but is not limited to, an antenna, at least one amplifier, a transceiver, a coupler, a low noise amplifier (Low Noise Amplifier, LNA), a duplexer, and the like. In addition, the RF circuit 1110 may further communicate with a network and another device through wireless communication. Any communications standard or protocol may be used for the wireless communication, and includes, but is not limited to, global system for mobile communications (Global System for Mobile Communications, GSM), general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), email, short message service (Short Message Service, SMS), and the like.

The memory 1120 may be configured to store software program and a module. The processor 1180 runs the software program and the module that are stored in the memory 1120, to perform various function applications and data processing of the mobile phone. The memory 1120 may mainly include a program storage area and a data storage area. The program storage area may store an operating system, an application program required by at least one function (such as a sound playback function and an image display function), and the like. The data storage area may store data (such as audio data and an address book) created based on use of the mobile phone, and the like. In addition, the memory 1120 may include a high speed random access memory, and may further include a nonvolatile memory, such as at least one magnetic disk storage device, a flash memory device, or another volatile solid-state storage device.

The input unit 1130 may be configured to: receive input digit or character information, and generate a key signal input related to a user setting and function control of the mobile phone. Specifically, the input unit 1130 may include a touch panel 1131 and another input device 1132. The touch panel 1131, also referred to as a touchscreen, may collect a touch operation of a user on or near the touch panel (such as an operation of the user on the touch panel 1131 or near the touch panel 1131 by using any suitable object or accessory such as a finger or a stylus), and drive a corresponding connection apparatus based on a preset program. Optionally, the touch panel 1131 may include two parts: a touch detection apparatus and a touch controller. The touch detection apparatus detects a touch position of the user, detects a signal generated by the touch operation, and transfers the signal to the touch controller. The touch controller receives touch information from the touch detection apparatus, converts the touch information into touch point coordinates, and sends the touch point coordinates to the processor 1180. Moreover, the touch controller can receive and execute a command sent from the processor 1180. In addition, the touch panel 1131 may be implemented in a plurality of types, such as a resistive type, a capacitive type, an infrared type, and a surface acoustic wave type. The input unit 1130 may include another input device 1132 in addition to the touch panel 1131. Specifically, the another input device 1132 may include, but is not limited to, one or more of a physical keyboard, a functional key (such as a volume control key or a switch key), a trackball, a mouse, and a joystick.

The display unit 1140 may be configured to display information entered by the user or information provided to the user, and various menus of the mobile phone. The display unit 1140 may include a display panel 1141. Optionally, the display panel 1141 may be configured by using a liquid crystal display (Liquid Crystal Display, LCD), an organic light-emitting diode (Organic Light-Emitting Diode, OLED), or the like. Further, the touch panel 1131 may cover the display panel 1141. After detecting a touch operation on or near the touch panel 1131, the touch panel 1131 transfers the touch operation to the processor 1180, to determine a type of the touch event. Then, the processor 1180 provides corresponding visual output on the display panel 1141 based on the type of the touch event. Although, in FIG. 10, the touch panel 1131 and the display panel 1141 are used as two independent parts to implement input and output functions of the mobile phone, in some embodiments, the touch panel 1131 and the display panel 1141 may be integrated to implement the input and output functions of the mobile phone.

The mobile phone may further include at least one sensor 1150 such as an optical sensor, a motion sensor, and other sensors. Specifically, the optical sensor may include an ambient light sensor and a proximity sensor. The ambient light sensor may adjust luminance of the display panel 1141 based on brightness of ambient light. The optical sensor may switch off the display panel 1141 and/or backlight when the mobile phone is moved to the ear. As a type of motion sensor, an acceleration sensor may detect values of acceleration in various directions (usually on three axes), may detect, in a static state, a value and a direction of gravity, and may be used for application that identifies a posture (such as screen switching between a landscape mode and a portrait mode, a related game, and magnetometer posture calibration) of the mobile phone, a vibration-identification-related function (such as a pedometer and tapping), and the like. Other sensors such as a gyroscope, a barometer, a hygrometer, a thermometer, and an infrared sensor, which may be configured on the mobile phone, arc not further described herein.

The audio circuit 1160, a loudspeaker 1161, and a microphone 1162 may provide audio interfaces between the user and the mobile phone. The audio circuit 1160 may convert received audio data into an electrical signal and transmit the electrical signal to the loudspeaker 1161. The loudspeaker 1161 converts the electrical signal into a sound signal for output. In addition, the microphone 1162 converts a collected sound signal into an electrical signal. The audio circuit 1160 receives the electrical signal and converts the electrical signal into audio data, and outputs the audio data to the processor 1180 for processing. Then, the processor 1180 sends the audio data to, for example, another mobile phone by using the RF circuit 1110, or outputs the audio data to the memory 1120 for further processing.

Wi-Fi belongs to a short distance radio transmission technology. The mobile phone may help, by using a Wi-Fi module 1170, the user send and receive emails, browse a web page, access streaming media, and so on, which provides wireless broadband Internet access for the user. Although FIG. 20 shows the Wi-Fi module 1170, it may be understood that the Wi-Fi module 1170 is not a necessary component of the mobile phone, and the Wi-Fi module 1170 may be omitted as required provided that the scope of the essence of this embodiment of this application is not changed.

The processor 1180 is a control center of the mobile phone, and is connected to various parts of the mobile phone by using various interfaces and lines. By running or executing the software program and/or module stored in the memory 1120, and invoking the data stored in the memory 1120, the processor 1180 performs various functions of the mobile phone and processes data, thereby performing overall monitoring on the mobile phone. Optionally, the processor 1180 may include one or more processing units. For example, the processor 1180 may integrate an application processor and a modem processor. The application processor mainly processes an operating system, a user interface, an application program, and the like. The modem processor mainly processes wireless communication. It may be understood that the foregoing modem processor may alternatively not be integrated into the processor 1180.

The mobile phone further includes a power supply 1190 (such as a battery) for supplying power to the components. Optionally, the power supply may be logically connected to the processor 1180 by using a power management system, thereby implementing functions such as charging and discharging management, and power consumption management by using the power management system.

The mobile phone may further include a camera lens 1200. The camera lens may be a front-facing camera, or may be a rear-facing camera. Although not shown, the mobile phone may further include a Bluetooth module, a GPS module, and the like. Details are not described herein again.

In this embodiment of this application, the processor 1180 included in the mobile phone may be configured to perform the foregoing embodiments of the data transmission method, and have similar implementation principles and technical effects. Details are not described herein again.

This application further provides a chip, including a processor and an interface. The interface is configured to input/output data or an instruction processed by the processor. The processor is configured to perform the methods provided in the foregoing method embodiments. The chip may be applied to user equipment or may be applied to a network device.

This application further provides a program, and the program is configured to perform the methods provided in the foregoing method embodiments when executed by a processor.

This application further provides a program product, for example, a computer-readable storage medium. The program product stores an instruction, and when the instruction is run on a computer, the computer is enabled to perform the methods provided in the foregoing method embodiments.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

## Claims

1. A data transmission method, comprising:
receiving (S101), by first user equipment, a transport block sent by a network device via multicast to the first user equipment and a
second user equipment, wherein the transport block comprises at least one first code block group, CBG;
receiving (S102), by the first user equipment, first control information sent by the second user equipment, wherein the first control information is used to instruct the first user equipment to send at least one second CBG to the second user equipment, wherein the second CBG is CBG comprised in the transport block and failing to be received by the second user equipment from the network device; and
sending (S103,S104), by the first user equipment, at least one third CBG to the second user equipment, wherein the third CBG is a CBG comprised in the transport block and correctly received by the first user equipment from the network device, and the third CBG is the CBG failing to be received by the second user equipment from the network device.

2. The method according to claim 1, wherein the first control information is further used to indicate a time-frequency resource used when the first user equipment sends the at least one third CBG; and
the sending (S103,S104), by the first user equipment, at least one third CBG to the second user equipment comprises:
determining, by the first user equipment, based on an arrangement location of the at least one third CBG in the at least one second CBG, a time domain location of the at least one third CBG on the time-frequency resource; and
mapping, by the first user equipment, the at least one third CBG onto the time-frequency resource, and sending the at least one third CBG to the second user equipment.

3. The method according to claim 1 or 2, wherein the first control information is further used to indicate a transmission parameter used when the first user equipment sends the at least one third CBG; and
the sending (S103,S104), by the first user equipment, at least one third CBG to the second user equipment comprises:
sending, by the first user equipment, the at least one third CBG to the second user equipment by using the transmission parameter.

4. The method according to any one of claims 1 to 3, wherein after the receiving (S101), by first user equipment, a transport block sent by a network device to second user equipment, the method further comprises:
Sending (S202), by the first user equipment, second control information to the network device, wherein the second control information is used to indicate a CBG failing to be received by the first user equipment, and/or the second control information is used to indicate a CBG correctly received by the first user equipment.

5. The method according to claim 4, wherein the second control information comprises a bitmap, one bit in the bitmap corresponds to one CBG; and when the bit is a first value, it indicates that the CBG corresponding to the bit is correctly received by the first user equipment, and when the bit is a second value, it indicates that the CBG corresponding to the bit fails to be received by the first user equipment.

6. A data transmission method, comprising:
Receiving (S101), by a second user equipment, a transport block sent by a network device via multicast to the second user equipment and at least a first user equipment, wherein the transport block comprises at least one first code block group, CBG;
Sending (S102), by the second user equipment, first control information the at least one first user equipment, wherein the first control information is used to instruct each of the at least one first user equipment to send at least one second CBG to the second user equipment, wherein the second CBG is a CBG comprised in the transport block and failing to be received by the second user equipment from the network device; and
Receiving (S103,S104), by the second user equipment, at least one third CBG sent by the at least one first user equipment, wherein the third CBG is a CBG comprised in the transport block and correctly received by the at least one first user equipment from the network device, and the third CBG is the CBG failing to be received by the second user equipment from the network device.

7. The method according to claim 6, wherein the first control information is further used to indicate a time-frequency resource used when the first user equipment sends the at least one third CBG; and
the receiving (S103,S104), by the second user equipment, at least one third CBG sent by the at least one first user equipment comprises:
receiving, by the second user equipment, the at least one third CBG sent by the at least one first user equipment on the time-frequency resource, and determining, based on a time domain location of at least one third CBG sent by each first user equipment on the time-frequency resource, a second CBG corresponding to the at least one third CBG sent by each first user equipment.

8. The method according to claim 6 or 7, wherein the first control information is further used to indicate a transmission parameter used when the first user equipment sends the at least one third CBG; and
the receiving (S103,S104), by the second user equipment, at least one third CBG sent by the at least one first user equipment comprises:
receiving, by the second user equipment by using the transmission parameter, the at least one third CBG sent by the at least one first user equipment.

9. The method according to any one of claims 6 to 8, wherein after the receiving (S103,S104), by the second user equipment, at least one third CBG sent by the at least one first user equipment, the method further comprises:
Receiving (S204), by the second user equipment, at least one fourth CBG sent by the network device, wherein the at least one fourth CBG is a CBG failing to be received by all of the at least one first user equipment from the network device.

10. A data transmission method, comprising:
Multicasting (S201), by a network device, a transport block to at least one first user equipment and second user equipment, wherein the transport block comprises at least one first code block group, CBG;
receiving (S202), by the network device, second control information sent by each of the at least one first user equipment, wherein the second control information is used to indicate a CBG comprised in the transport block and failing to be received by the at least one first user equipment from the network device, and/or the second control information is used to indicate a CBG comprised in the transport block and correctly received by the at least one first user equipment;
determining (S203), by the network device, at least one fourth CBG based on the second control information sent by each of the at least one first user equipment, wherein the at least one fourth CBG is the CBG failing to be received by all of the at least one first user equipment from the network device; and
resending (S204), by the network device, without waiting on a third control information from the second user equipment, the at least one fourth CBG to the second user equipment.

11. The method according to claim 10, wherein the second control information comprises a bitmap, one bit in the bitmap corresponds to one CBG; when the bit is a first value, it indicates that the CBG corresponding to the bit is correctly received by the first user equipment, and when the bit is a second value, it indicates that the CBG corresponding to the bit fails to be received by the first user equipment.

12. User equipment, wherein the user equipment is first user equipment, and the first user equipment comprises:
a receiving module (11), configured to receive a transport block sent by a network device via multicast to the first user equipment and a second user equipment, and first control information sent by the second user equipment, wherein the transport block comprises at least one first code block group, CBG, the first control information is used to instruct the at least one first user equipment to send at least one second CBG to the second user equipment, wherein the second CBG is a CBG comprised in the transport block and failing to be received by the second user equipment from the network device; and
a sending module (12), configured to send at least one third CBG to the second user equipment, wherein the third CBG is a CBG comprised in the trnsport block and correctly received by the first user equipment from the network device, and the third CBG is the CBG failing to be received by the second user equipment from the network device.

13. The equipment according to claim 12, wherein the first control information is further used to indicate a time-frequency resource used when the first user equipment sends the at least one third CBG; the first user equipment further comprises:
a processing module (13), configured to determine, based on an arrangement location of the at least one third CBG in the at least one second CBG, a time domain location of the at least one third CBG on the time-frequency resource; and
the sending module (12) is specifically configured to: map the at least one third CBG onto the time-frequency resource, and send the at least one third CBG to the second user equipment.

14. The equipment according to claim 12 or 13, wherein the first control information is further used to indicate a transmission parameter used when the first user equipment sends the at least one third CBG; and
the sending module (12) is specifically configured to send the at least one third CBG to the second user equipment by using the transmission parameter.

15. The equipment according to any one of claims 12 to 14, wherein
the sending module (12) is further configured to send, after the receiving module receives the transport block sent by the network device to the second user equipment, second control information to the network device, wherein the second control information is used to indicate a CBG failing to be received by the first user equipment, and/or the second control information is used to indicate a CBG correctly received by the first user equipment.

## Patentansprüche

1. Datenübertragungsverfahren, das Folgendes umfasst:
Empfangen (S101), durch eine erste Benutzereinrichtung, eines Transportblocks, der durch eine Netzwerkvorrichtung per Multicast an die erste Benutzereinrichtung und eine zweite Benutzereinrichtung gesendet werden, wobei der Transportblock mindestens eine erste Codeblockgruppe, CBG, umfasst;
Empfangen (S102), durch die erste Benutzereinrichtung, erster Steuerinformationen, die durch die zweite Benutzereinrichtung gesendet werden, wobei die ersten Steuerinformationen verwendet werden, um die erste Benutzereinrichtung anzuweisen, mindestens eine zweite CBG an die zweite Benutzereinrichtung zu senden, wobei die zweite CBG eine CBG ist, die in dem Transportblock enthalten ist und nicht durch die zweite Benutzereinrichtung von der Netzwerkvorrichtung empfangen werden kann;und
Senden (S103, S104), durch die erste Benutzereinrichtung, von mindestens einer dritten CBG an die zweite Benutzereinrichtung, wobei die dritte CBG eine CBG ist, die in dem Transportblock enthalten ist und durch die erste Benutzereinrichtung von der Netzwerkvorrichtung korrekt empfangen wird, und die dritte CBG die CBG ist, die nicht durch die zweite Benutzereinrichtung von der Netzwerkvorrichtung empfangen werden kann.

2. Verfahren nach Anspruch 1, wobei die ersten Steuerinformationen ferner verwendet werden, um eine Zeit-Frequenz-Ressource anzugeben, die verwendet wird, wenn die erste Benutzereinrichtung die mindestens eine dritte CBG sendet; und
das Senden (S103, S104), durch die erste Benutzereinrichtung, von mindestens einer dritten CBG an die zweite Benutzereinrichtung Folgendes umfasst:
Bestimmen, durch die erste Benutzereinrichtung, basierend auf einem Anordnungsort der mindestens einen dritten CBG in der mindestens einen zweiten CBG, eines Zeitbereichsorts der mindestens einen dritten CBG auf der Zeit-Frequenz-Ressource; und
Zuordnen, durch die erste Benutzereinrichtung, der mindestens einen dritten CBG auf die Zeit-Frequenz-Ressource und Senden der mindestens einen dritten CBG an die zweite Benutzereinrichtung.

3. Verfahren nach Anspruch 1 oder 2, wobei die ersten Steuerinformationen ferner verwendet werden, um einen Übertragungsparameter anzugeben, der verwendet wird, wenn die erste Benutzereinrichtung die mindestens eine dritte CBG sendet; und
das Senden (S103, S104), durch die erste Benutzereinrichtung, von mindestens einer dritten CBG an die zweite Benutzereinrichtung Folgendes umfasst:
Senden, durch die erste Benutzereinrichtung, der mindestens einen dritten CBG an die zweite Benutzereinrichtung durch Verwenden des Übertragungsparameters.

4. Verfahren nach einem der Ansprüche 1 bis 3, wobei, nach dem Empfangen (S101), durch die erste Benutzereinrichtung, eines Transportblocks, der durch eine Netzwerkvorrichtung an eine zweite Benutzereinrichtung gesendet wird, ferner Folgendes umfasst:
Senden (S202), durch die erste Benutzereinrichtung, zweiter Steuerinformationen an die Netzwerkvorrichtung, wobei die zweiten Steuerinformationen verwendet werden, um anzugeben, dass eine CBG nicht durch die erste Benutzereinrichtung empfangen werden kann, und/oder die zweiten Steuerinformationen verwendet werden, um anzugeben, dass eine CBG durch die erste Benutzereinrichtung korrekt empfangen wird.

5. Verfahren nach Anspruch 4, wobei die zweiten Steuerinformationen eine Bitmap umfassen, ein Bit in der Bitmap einer CBG entspricht; und wenn das Bit ein erster Wert ist, es angibt, dass die CBG, die dem Bit entspricht, durch die erste Benutzereinrichtung korrekt empfangen wird, und wenn das Bit ein zweiter Wert ist, es angibt, dass die CBG, die dem Bit entspricht, nicht durch die erste Benutzereinrichtung empfangen werden kann.

6. Datenübertragungsverfahren, das Folgendes umfasst:
Empfangen (S101), durch eine zweite Benutzereinrichtung, eines Transportblocks, der durch eine Netzwerkvorrichtung per Multicast an die zweite Benutzereinrichtung und mindestens eine erste Benutzereinrichtung gesendet wird, wobei der Transportblock mindestens eine erste Codeblockgruppe, CBG, umfasst;
Senden (S102), durch die zweite Benutzereinrichtung, von ersten Steuerinformationen an die mindestens eine erste Benutzereinrichtung, wobei die ersten Steuerinformationen verwendet werden, um jedes der mindestens einen ersten Benutzereinrichtung anzuweisen, mindestens eine zweite CBG an die zweite Benutzereinrichtung zu senden, wobei die zweite CBG eine CBG ist, die in dem Transportblock enthalten ist und nicht durch die zweite Benutzereinrichtung von der Netzwerkvorrichtung empfangen werden kann; und
Empfangen (S103, S104), durch die zweite Benutzereinrichtung, von mindestens einer dritten CBG, die durch die mindestens eine erste Benutzereinrichtung gesendet wird, wobei die dritte CBG eine CBG ist, die in dem Transportblock enthalten ist und durch die mindestens eine erste Benutzereinrichtung von der Netzwerkvorrichtung korrekt empfangen wird, und die dritte CBG eine CBG ist, die nicht durch die zweite Benutzereinrichtung von der Netzwerkvorrichtung empfangen werden kann.

7. Verfahren nach Anspruch 6, wobei die ersten Steuerinformationen ferner verwendet werden, um eine Zeit-Frequenz-Ressource anzugeben, die verwendet wird, wenn die erste Benutzereinrichtung die mindestens eine dritte CBG sendet; und
das Empfangen (S103, S104), durch die zweite Benutzereinrichtung, von mindestens einer dritten CBG, die durch die mindestens eine erste Benutzereinrichtung gesendet wird, Folgendes umfasst:
Empfangen, durch die zweite Benutzereinrichtung, der mindestens einen dritten CBG, die durch die mindestens eine erste Benutzereinrichtung auf der Zeit-Frequenz-Ressource gesendet wird, und Bestimmen, basierend auf einem Zeitbereichsort, der mindestens einen dritten CBG, die durch jede erste Benutzereinrichtung auf der Zeit-Frequenz-Ressource gesendet wird, eine zweite CBG, die der mindestens einen dritten CBG entspricht, die durch jede erste Benutzereinrichtung gesendet wird.

8. Verfahren nach Anspruch 6 oder 7, wobei die ersten Steuerinformationen ferner verwendet werden, um einen Übertragungsparameter anzugeben, der verwendet wird, wenn die erste Benutzereinrichtung die mindestens eine dritte CBG sendet; und
das Empfangen (S103, S104), durch die zweite Benutzereinrichtung, von mindestens einer dritten CBG, die durch die mindestens eine erste Benutzereinrichtung gesendet wird, Folgendes umfasst:
Empfangen, durch die zweite Benutzereinrichtung durch Verwenden des Übertragungsparameters, der mindestens einen dritten CBG, die durch die mindestens eine erste Benutzereinrichtung gesendet wird.

9. Verfahren nach einem der Ansprüche 6 bis 8, wobei nach dem Empfangen (S103, S104), durch die zweite Benutzereinrichtung, von mindestens einer dritten CBG, die durch die mindestens eine erste Benutzereinrichtung gesendet wird, das Verfahren ferner Folgendes umfasst:
Empfangen (S204), durch die zweite Benutzereinrichtung, von mindestens einer vierten CBG, die durch die Netzwerkvorrichtung gesendet wird, wobei die mindestens eine vierte CBG eine CBG ist, die nicht durch alle der mindestens einen ersten Benutzereinrichtung von der Netzwerkvorrichtung empfangen werden kann.

10. Datenübertragungsverfahren, das Folgendes umfasst:
Multicasting (S201), durch eine Netzwerkvorrichtung, eines Transportblocks an mindestens eine erste Benutzereinrichtung und eine zweite Benutzereinrichtung, wobei der Transportblock mindestens eine erste Codeblockgruppe, CBG, umfasst;
Empfangen (S202), durch die Netzwerkvorrichtung, zweiter Steuerinformationen, die durch jede der mindestens einen ersten Benutzereinrichtung gesendet werden, wobei die zweiten Steuerinformationen verwendet werden, um eine CBG anzugeben, die in dem Transportblock enthalten ist und die nicht durch die mindestens eine erste Benutzereinrichtung von der Netzwerkvorrichtung empfangen werden kann und/oder die zweiten Steuerinformationen verwendet werden, um eine CBG anzugeben, die in dem Transportblock enthalten ist und die durch die mindestens eine erste Benutzereinrichtung korrekt empfangen wird;
Bestimmen (S203), durch die Netzwerkvorrichtung, von mindestens einer vierten CBG basierend auf den zweiten Steuerinformationen, die durch jede der mindestens einen ersten Benutzereinrichtung gesendet werden, wobei die mindestens eine vierte CBG die CBG ist, die nicht durch alle der mindestens einen ersten Benutzereinrichtung von der Netzwerkvorrichtung empfangen werden kann; und
erneutes Senden (S204), durch die Netzwerkvorrichtung, ohne auf dritte Steuerinformationen von der zweiten Benutzereinrichtung zu warten, der mindestens einen vierten CBG an die zweite Benutzereinrichtung.

11. Verfahren nach Anspruch 10, wobei die zweiten Steuerinformationen eine Bitmap umfassen, ein Bit in der Bitmap einer CBG entspricht; wenn das Bit ein erster Wert ist, es angibt, dass die CBG, die dem Bit entspricht, durch die erste Benutzereinrichtung korrekt empfangen wird, und wenn das Bit ein zweiter Wert ist, es angibt, dass die CBG, die dem Bit entspricht, nicht durch die erste Benutzereinrichtung empfangen werden kann.

12. Benutzereinrichtung, wobei die Benutzereinrichtung eine erste Benutzereinrichtung ist und die erste Benutzereinrichtung Folgendes umfasst:
ein Empfangsmodul (11), das konfiguriert ist, um einen Transportblock, der durch eine Netzwerkvorrichtung per Multicast an die erste Benutzereinrichtung und eine zweite Benutzereinrichtung gesendet wird, und erster Steuerinformationen, die durch die zweite Benutzereinrichtung gesendet werden, zu empfangen, wobei der Transportblock mindestens eine erste Codeblockgruppe, CBG, umfasst, wobei die ersten Steuerinformationen verwendet werden, um die mindestens eine erste Benutzereinrichtung anzuweisen, mindestens eine zweite CBG an die zweite Benutzereinrichtung zu senden, wobei die zweite CBG eine CBG ist, die in dem Transportblock enthalten ist und nicht durch die zweite Benutzereinrichtung von der Netzwerkvorrichtung empfangen werden kann; und
ein Sendemodul (12), das konfiguriert ist, um mindestens eine dritte CBG an die zweite Benutzereinrichtung zu senden, wobei die dritte CBG eine CBG ist, die in dem Übertragungsblock enthalten ist und durch die erste Benutzereinrichtung von der Netzwerkvorrichtung korrekt empfangen wird, und die dritte CBG die CBG ist, die durch die zweite Benutzereinrichtung von der Netzwerkvorrichtung nicht empfangen werden kann.

13. Einrichtung nach Anspruch 12, wobei die ersten Steuerinformationen ferner verwendet werden, um eine Zeit-Frequenz-Ressource anzugeben, die verwendet wird, wenn die erste Benutzereinrichtung die mindestens eine dritte CBG sendet;
die erste Benutzereinrichtung ferner Folgendes umfasst:
ein Verarbeitungsmodul (13), das konfiguriert ist, um basierend auf einem Anordnungsort der mindestens einen dritten CBG in der mindestens einen zweiten CBG einen Zeitbereichsort der mindestens einen dritten CBG auf der Zeit-Frequenz-Ressource zu bestimmen; und
das Sendemodul (12) speziell für Folgendes konfiguriert ist: Zuordnen der mindestens einen dritten CBG auf die Zeit-Frequenz-Ressource und Senden der mindestens einen dritten CBG an die zweite Benutzereinrichtung.

14. Einrichtung nach Anspruch 12 oder 13, wobei die ersten Steuerinformationen ferner verwendet werden, um einen Übertragungsparameter anzugeben, der verwendet wird, wenn die erste Benutzereinrichtung die mindestens eine dritte CBG sendet; und
das Sendemodul (12) speziell konfiguriert ist, um die mindestens eine dritte CBG durch Verwenden des Übertragungsparameters an die zweite Benutzereinrichtung zu senden.

15. Einrichtung nach einem der Ansprüche 12 bis 14, wobei
das Sendemodul (12) ferner konfiguriert ist, um, nachdem das Empfangsmodul den Transportblock empfängt, der durch die Netzwerkvorrichtung an die zweite Benutzereinrichtung gesendet wird, zweite Steuerinformationen an die Netzwerkvorrichtung zu senden, wobei die zweiten Steuerinformationen verwendet werden, um anzugeben, dass eine CBG nicht durch die erste Benutzereinrichtung empfangen werden kann, und/oder die zweiten Steuerinformationen verwendet werden, um anzugeben, dass eine CBG durch die erste Benutzereinrichtung korrekt empfangen wird.

## Revendications

1. Procédé de transmission de données, comprenant :
la réception (S101), par le premier équipement utilisateur, d'un bloc de transport envoyé par un dispositif réseau par le biais d'une multidiffusion vers le premier équipement d'utilisateur et vers un second équipement d'utilisateur, dans lequel le bloc de transport comprend au moins un premier groupe de blocs de code, CBG ;
la réception (S102), par le premier équipement utilisateur, de premières informations de commande envoyées par le second équipement utilisateur, les premières informations de commande étant utilisées pour ordonner au premier équipement utilisateur d'envoyer au moins un deuxième CBG vers le second équipement utilisateur, le deuxième CBG est un CBG compris dans le bloc de transport et ne parvenant pas à être reçu par le second équipement utilisateur en provenance du dispositif réseau ; et
l'envoi (S103, S104), par le premier équipement utilisateur, d'au moins un troisième CBG vers le second équipement utilisateur, le troisième CBG étant un CBG compris dans le bloc de transport et correctement reçu par le premier équipement utilisateur en provenance du dispositif réseau, et le troisième CBG est le CBG ne parvenant pas à être reçu par le second équipement utilisateur en provenance du dispositif réseau.

2. Procédé selon la revendication 1, dans lequel les premières informations de commande sont en outre utilisées pour indiquer une ressource temps-fréquence utilisée lorsque le premier équipement utilisateur envoie l'au moins un troisième CBG ; et
l'envoi (S103, S104), par le premier équipement utilisateur, d'au moins un troisième CBG vers le second équipement utilisateur comprend :
la détermination, par le premier équipement utilisateur, sur la base d'un emplacement d'agencement de l'au moins un troisième CBG dans l'au moins un deuxième CBG, d'un emplacement de domaine temporel de l'au moins un troisième CBG sur la ressource temps-fréquence ; et
le mappage, par le premier équipement utilisateur, de l'au moins un troisième CBG sur la ressource temps-fréquence, et l'envoi de l'au moins un troisième CBG au second équipement utilisateur.

3. Procédé selon la revendication 1 ou 2, dans lequel les premières informations de commande sont en outre utilisées pour indiquer un paramètre de transmission utilisé lorsque le premier équipement utilisateur envoie l'au moins un troisième CBG ; et
l'envoi (S103, S104), par le premier équipement utilisateur, d'au moins un troisième CBG vers le second équipement utilisateur comprend :
l'envoi, par le premier équipement utilisateur, de l'au moins un troisième CBG vers le second équipement utilisateur en utilisant le paramètre de transmission.

4. Procédé selon l'une quelconque des revendications 1 à 3, dans lequel après la réception (S101), par le premier équipement utilisateur, d'un bloc de transport envoyé par un dispositif réseau vers le second équipement utilisateur, le procédé comprend en outre :
L'envoi (S202), par le premier équipement utilisateur, de deuxièmes informations de commande vers le dispositif réseau, les deuxièmes informations de commande étant utilisées pour indiquer un CBG ne parvenant pas à être reçu par le premier équipement utilisateur, et/ou les deuxièmes informations de commande étant utilisées pour indiquer un CBG correctement reçu par le premier équipement utilisateur.

5. Procédé selon la revendication 4, dans lequel les deuxièmes informations de commande comprennent une table de bits, un bit dans la table de bits correspond à un CBG ; et lorsque le bit est une première valeur, cela indique que le CBG correspondant au bit est correctement reçu par le premier équipement utilisateur, et lorsque le bit est une seconde valeur, cela indique que le CBG correspondant au bit ne parvient pas à être reçu par le premier équipement utilisateur.

6. Procédé de transmission de données, comprenant :
La réception (S101), par un second équipement utilisateur, d'un bloc de transport envoyé par un dispositif réseau par le biais d'une multidiffusion vers le second équipement utilisateur et vers au moins un premier équipement utilisateur, le bloc de transport comprenant au moins un premier groupe de blocs de code, CBG ;
L'envoi (S102), par le second équipement utilisateur, de premières informations de commande vers l'au moins un premier équipement utilisateur, les premières informations de commande étant utilisées pour ordonner à chacun de l'au moins un premier équipement utilisateur d'envoyer au moins un deuxième CBG vers le second un équipement utilisateur, le deuxième CBG étant un CBG compris dans le bloc de transport et ne parvenant pas à être reçu par le second équipement utilisateur en provenance du dispositif réseau ; et
La réception (S103, S104), par le second équipement utilisateur, d'au moins un troisième CBG envoyé par l'au moins un premier équipement utilisateur, le troisième CBG étant un CBG compris dans le bloc de transport et correctement reçu par l'au moins un premier équipement utilisateur en provenance du dispositif réseau, et le troisième CBG est le CBG ne parvenant pas à être reçu par le second équipement utilisateur en provenance du dispositif réseau.

7. Procédé selon la revendication 6, dans lequel les premières informations de commande sont en outre utilisées pour indiquer une ressource temps-fréquence utilisée lorsque le premier équipement utilisateur envoie l'au moins un troisième CBG ; et
la réception (S103, S104), par le second équipement utilisateur, d'au moins un troisième CBG envoyé par l'au moins un premier équipement utilisateur comprend :
la réception, par le second équipement utilisateur, de l'au moins un troisième CBG envoyé par l'au moins un premier équipement utilisateur sur la ressource temps-fréquence, et la détermination, sur la base d'un emplacement de domaine temporel d'au moins un troisième CBG envoyé par chaque premier équipement utilisateur sur la ressource temps-fréquence, d'un deuxième CBG correspondant à l'au moins un troisième CBG envoyé par chaque premier équipement utilisateur.

8. Procédé selon la revendication 6 ou 7, dans lequel les premières informations de commande sont en outre utilisées pour indiquer un paramètre de transmission utilisé lorsque le premier équipement utilisateur envoie l'au moins un troisième CBG ; et
la réception (S103, S104), par le second équipement utilisateur, d'au moins un troisième CBG envoyé par l'au moins un premier équipement utilisateur comprend :
la réception, par le second équipement utilisateur en utilisant le paramètre de transmission, de l'au moins un troisième CBG envoyé par l'au moins un premier équipement utilisateur.

9. Procédé selon l'une quelconque des revendications 6 à 8, dans lequel après la réception (S103, S104), par le second équipement utilisateur, d'au moins un troisième CBG envoyé par l'au moins un premier équipement utilisateur, le procédé comprend en outre :
La réception (S204), par le second équipement utilisateur, d'au moins un quatrième CBG envoyé par le dispositif réseau, l'au moins un quatrième CBG étant un CBG ne parvenant pas à être reçu par tous les au moins un premier équipement utilisateur en provenance du dispositif réseau.

10. Procédé de transmission de données, comprenant :
La multidiffusion (S201), par un dispositif réseau, d'un bloc de transport vers au moins un premier équipement d'utilisateur et un second équipement d'utilisateur, le bloc de transport comprenant au moins un premier groupe de blocs de code, CBG ;
la réception (S202), par le dispositif réseau, des deuxièmes informations de commande envoyées par chacun de l'au moins un premier équipement utilisateur, les deuxièmes informations de commande étant utilisées pour indiquer un CBG compris dans le bloc de transport et ne parvenant pas à être reçu par l'au moins un premier équipement utilisateur du dispositif réseau, et/ou les deuxièmes informations de commande étant utilisées pour indiquer un CBG compris dans le bloc de transport et correctement reçu par l'au moins un premier équipement utilisateur ;
la détermination (S203), par le dispositif réseau, d'au moins un quatrième CBG sur la base des deuxièmes informations de commande envoyées par chacun de l'au moins un premier équipement utilisateur, l'au moins un quatrième CBG étant le CBG ne parvenant pas être reçu par tous les l'au moins un premier équipement utilisateur en provenance du dispositif réseau ; et
le renvoi (S204), par le dispositif de réseau, sans attente des troisièmes informations de commande en provenance du second équipement utilisateur, de l'au moins un quatrième CBG vers le second équipement utilisateur.

11. Procédé selon la revendication 10, dans lequel les deuxièmes informations de commande comprennent une table de bits, un bit dans la table de bits correspond à un CBG ; lorsque le bit est une première valeur, cela indique que le CBG correspondant au bit est correctement reçu par le premier équipement utilisateur, et lorsque le bit est une seconde valeur, cela indique que le CBG correspondant au bit ne parvient pas à être reçu par le premier équipement utilisateur.

12. Équipement utilisateur, l'équipement utilisateur étant le premier équipement utilisateur, et le premier équipement utilisateur comprenant :
un module de réception (11), configuré pour recevoir un bloc de transport envoyé par un dispositif réseau par multidiffusion vers le premier équipement utilisateur et vers un second équipement utilisateur, et des premières informations de commande envoyées par le second équipement utilisateur, le bloc de transport comprenant au moins un premier groupe de blocs de code, CBG, les premières informations de commande étant utilisées pour ordonner à l'au moins un premier équipement utilisateur d'envoyer au moins un deuxième CBG vers le second équipement utilisateur, le deuxième CBG étant un CBG compris dans le bloc de transport et ne parvenant pas à être reçu par le second équipement utilisateur en provenance dispositif réseau ; et
un module d'envoi (12), configuré pour envoyer au moins un troisième CBG vers le second équipement utilisateur, le troisième CBG étant un CBG compris dans le bloc de transport et correctement reçu par le premier équipement utilisateur en provenance du dispositif réseau, et le troisième CBG étant le CBG ne parvenant pas à être reçu par le second équipement utilisateur en provenance du dispositif réseau.

13. Équipement selon la revendication 12, dans lequel les premières informations de commande sont en outre utilisées pour indiquer une ressource temps-fréquence utilisée lorsque le premier équipement utilisateur envoie l'au moins un troisième CBG ;
le premier équipement utilisateur comprend en outre :
un module de traitement (13), configuré pour déterminer, sur la base d'un emplacement d'agencement de l'au moins un troisième CBG dans l'au moins un deuxième CBG, un emplacement de domaine temporel de l'au moins un troisième CBG sur la ressource temps-fréquence ; et
le module d'envoi (12) est spécifiquement configuré pour : mapper l'au moins un troisième CBG sur la ressource temps-fréquence, et envoyer l'au moins un troisième CBG vers le second équipement utilisateur.

14. Équipement selon la revendication 12 ou 13, dans lequel les premières informations de commande sont en outre utilisées pour indiquer un paramètre de transmission utilisé lorsque le premier équipement utilisateur envoie l'au moins un troisième CBG ; et
le module d'envoi (12) est spécifiquement configuré pour envoyer l'au moins un troisième CBG vers le second équipement utilisateur en utilisant le paramètre de transmission.

15. Appareil selon l'une quelconque des revendications 12 à 14, dans lequel
le module d'envoi (12) est en outre configuré pour envoyer, après que le module de réception a reçu le bloc de transport envoyé par le dispositif réseau vers le second équipement utilisateur, des deuxièmes informations de commande vers le dispositif réseau, les deuxièmes informations de commande étant utilisées pour indiquer un CBG ne parvenant pas à être reçu par le premier équipement utilisateur, et/ou les deuxièmes informations de commande étant utilisées pour indiquer un CBG correctement reçu par le premier équipement utilisateur.
